(19) Europäisches Patentamt
European Patent Office
Office européen des brevets

(11) **EP 1 105 960 B1**

(12) **EUROPÄISCHE PATENTSCHRIFT**

(45) Veröffentlichungstag und Bekanntmachung des Hinweises auf die Patenterteilung:
**18.04.2007  Patentblatt 2007/16**

(21) Anmeldenummer: **99942794.1**

(22) Anmeldetag: **21.07.1999**

(51) Int Cl.:
***H02K 1/00*** (2006.01)

(86) Internationale Anmeldenummer:
**PCT/EP1999/005186**

(87) Internationale Veröffentlichungsnummer:
**WO 2000/010240 (24.02.2000 Gazette 2000/08)**

(54) **TEMPERATURABHÄNGIGE DREHZAHLREGELUNG EINES ELEKTROMOTORS MIT EINEM MIKROPROZESSOR**

TEMPERATUR DEPENDENT SPEED CONTROL  WITH MICROPROCESSOR ROR AN ELECTRIC MOTOR

CONTRÔLE DE VITESSE DEPENDENT DE TEMPERATURE AVEC MICROPROCESSEUR POUR UN MOTEUR ELECTRIQUE

(84) Benannte Vertragsstaaten:
**AT BE CH CY DE DK ES FI FR GB GR IE IT LI LU MC NL PT SE**

(30) Priorität: **14.08.1998   DE 19836882**

(43) Veröffentlichungstag der Anmeldung:
**13.06.2001   Patentblatt 2001/24**

(60) Teilanmeldung:
**02015389.6 / 1 253 707**
**02018839.7 / 1 278 300**

(73) Patentinhaber: **ebm-papst St. Georgen GmbH & Co. KG**
**78112 St. Georgen (DE)**

(72) Erfinder:
• **HORNBERGER, Jörg**
**D-72280 Dornstetten (DE)**
• **JESKE, Frank**
**D-78112 St. Georgen (DE)**
• **KALTENBRUNNER, Hansjörg**
**D-78199 Bräunlingen (DE)**
• **KARWATH, Arno**
**D-78652 Deisslingen (DE)**

• **RAPPENECKER, Hermann**
**D-78147 Vöhrenbach (DE)**
• **DUFNER, Thomas**
**D-78136 Schonach (DE)**

(74) Vertreter: **Raible, Hans**
**Schoderstrasse 10**
**70192 Stuttgart (DE)**

(56) Entgegenhaltungen:
**EP-A- 0 088 626        EP-A- 0 684 692**
**WO-A-97/15111         WO-A-97/21268**
**DE-A- 3 702 947       US-A- 4 030 363**
**US-A- 4 743 815        US-A- 4 831 380**
**US-A- 4 949 624        US-A- 5 206 572**
**US-A- 5 275 012        US-A- 5 610 484**
**US-A- 5 632 156        US-A- 5 717 297**
**US-A- 5 825 642**

• **A. K. KOCHAAR, N. D. BURNS:
"MICROPROCESSORS AND THEIR MANUFACTURING APPLICATIONS" 1983 , E. ARNOLD , LONDON XP002133262 Seite 129 -Seite 131**

**Beschreibung**

Die Erfindung betrifft einen Elektromotor mit einer von einer variablen physikalischen Größe, insbesondere einer Temperatur, gesteuerten Drehzahl. Sie betrifft ferner ein Verfahren zur Drehzahlregelung eines solchen Elektromotors.

Bei der DE-A1-4,441,372 wird das Drehzahlverhalten eines Elektromotors durch eine Kennlinie n = f(T) dargestellt, wobei jeder Temperatur T eine Solldrehzahl n zugeordnet ist. Z.B. kann bei einem Lüfter bei steigender Temperatur die Drehzahl erhöht werden. Das Drehzahl-Temperatur-Verhalten wird hierbei durch analoge Bauelemente bestimmt. Jedoch ist, wegen der Fertigungstoleranzen der Bauelemente, keine große Genauigkeit erreichbar, und eine Umstellung auf ein anderes Verhalten ist nur mit großem Aufwand möglich.

Aus der US-A-5,717,297 ist ein elektronisch kommutierter Motor bekannt, bei dem der Kommutierungszeitpunkt abhängig von der Drehzahl verändert wird, damit bei höheren Drehzahlen der Strom früher von einer Motorphase zur nächsten Motorphase umgeschaltet wird. Zur Steuerung der Drehzahl abhängig von der Temperatur dienen ein Temperatursensor und ein analog arbeitender Temperaturregler, der bei Temperaturen unter 10° C den Motor abschaltet und bei Temperaturen oberhalb 60° C die maximale Motordrehzahl einstellt. Tritt am Temperatursensor ein Fehler auf, so wird die Motordrehzahl ebenfalls auf diese maximale Drehzahl umgeschaltet. Die Form der Temperatur-Drehzahl-Kurve ist durch die elektronischen Bauelemente dieses Motors vorgegeben. Da ihre Form durch analoge Bauelemente bestimmt wird, ist - wegen der Toleranzen der Bauelemente - auch hier keine große Genauigkeit erreichbar, und eine Umstellung auf eine andere Form dieser Kurve ist nur mit großem Aufwand möglich.

Es ist deshalb eine Aufgabe der Erfindung, einen neuen Elektromotor und eine neues Verfahren zur Regelung eines solchen Elektromotors bereit zu stellen.

Nach einem ersten Aspekt der Erfindung wird diese Aufgabe gelöst durch einen Elektromotor gemäß Patentanspruch 1. Ein solcher Elektromotor ist sehr variabel, da durch das gespeicherte Kennlinienfeld sein Drehzahlverhalten als Funktion der variablen physikalischen Größe leicht veränderbar ist, indem man einen oder mehrere der gespeicherten digitalen Einzelwerte verändert.

In Weiterbildung der Erfindung hat es sich als besonders vorteilhaft erwiesen, die digitalen Einzelwerte mindestens teilweise in Vektorform zu speichern, da dies ihre Verarbeitung wesentlich vereinfacht.

Gemäß Anspruch 3 wird, in vorteilhafter Weiterbildung der Erfindung, als variable physikalische Größe eine von einem temperaturabhängigen Widerstand erfasste Temperatur verwendet, und gemäß Anspruch 4 wird, wenn die physikalische Größe als analoger Wert vorliegt, ein A/D-Wandler zum Umsetzen dieser physikalischen Größe in einen Digitalwert verwendet.

Dabei wird mit besonderem Vorteil gemäß Anspruch 5 geprüft, ob bei der A/D-Wandlung ein Überlauf auftritt, denn ein solcher Überlauf wird bei richtiger Auslegung hauptsächlich dann entstehen, wenn ein Fehler aufgetreten ist.

Deshalb wird in besonders bevorzugter Weise in einem solchen Fall gemäß Anspruch 6 bei einem Überlauf der vom A/D-Wandler konvertierte digitale Wert durch einen vorgegebenen anderen digitalen Wert ersetzt. Dies ermöglicht es in sehr einfacher Weise, bei einem Fehler an einem Temperatursensor oder dessen Zuleitung die Motordrehzahl automatisch auf einen vorgegebenen Wert zu erhöhen.

Eine besonders vorteilhafte Weiterbildung der Erfindung ist Gegenstand des Anspruchs 7. Auf diese Weise kann z.B. bei einem Lüfter verhindert werden, dass kleine Temperaturänderungen zu häufigen Drehzahländerungen führen, was bei einem Lüfter für einen Computer den Benutzer irritieren könnte.

Eine vorteilhafte Weiterbildung dieser Ausgestaltung ist Gegenstand des Anspruchs 8, da dann z.B. ein Lüfter bei einem Temperaturanstieg mit seiner Drehzahl sofort der Temperatur folgen kann, während bei einem Sinken der Temperatur seine Drehzahl zunächst konstant gehalten wird.

Eine vorteilhafte Ausgestaltung der Erfindung ist Gegenstand des Anspruchs 10. Auf diese Weise kann das bei der A/D-Wandlung erzeugte Signal dazu dienen, ein Sollwertsignal für einen Drehzahlregler zu erzeugen.

Dabei wird in bevorzugter Weise als Istwertsignal für die Drehzahlregelung ein digitales Signal gemäß Anspruch 11 verwendet, und als gewünschter Wert ("Sollwert") für die Drehzahl verwendet man gemäß Anspruch 12 bevorzugt einen Zeitwert, den der Rotor für das Durchlaufen eines vorgegebenen Drehwinkels benötigen soll.

Zur Speicherung der Werte des Kennlinienfelds wird gemäß Anspruch 15 in bevorzugter Weise ein nichtflüchtiger Speicher verwendet, wobei gemäß Anspruch 16 mindestens ein Teil der in diesem Speicher gespeicherten digitalen Einzelwerte veränderbar ist, um so die Abhängigkeit der Drehzahl von der variablen physikalischen Größe verändern und den Motor an unterschiedliche Kundenforderungen anpassen zu können.

Hierbei ergibt sich eine besonders einfache Lösung durch den Gegenstand des Anspruchs 17, weil man dann mittels eines Eingabegeräts eine solche Änderung vornehmen kann, ohne dass die Hardware des Motors geändert werden muss.

Dabei ergibt sich eine sehr preiswerte Lösung durch den Gegenstand des Anspruchs 19, weil dann der Mikroprozessor oder Mikrocontroller des Elektromotors die Aufgabe der Datenübertragung zusätzlich übernehmen kann, wobei sich eine besonders einfache und zweckmäßige Lösung durch den Gegenstand des Anspruchs 20 ergibt. Wegen der geringen Zahl der benötigten elektronischen Bauelemente ergibt sich so eine sehr kompakte Bauweise des Motors.

Nach einem zweiten Aspekt der Erfindung wird die gestellte Aufgabe gelöst durch den Gegenstand des Patentanspruchs 24. Dieser betrifft ein Verfahren zum Steuern der Drehzahl eines Elektromotors, das Verfahrensschritte definiert, durch welche der aktuelle Drehzahl-Sollwert aus einem gespeicherten Kennlinienfeld abgeleitet wird.

Als sehr vorteilhaft hat es sich dabei erwiesen, wenn gemäß Anspruch 51 zusätzlich zu dem für eine bestimmte Temperatur kennzeichnenden Wert und einer diesem Wert zugeordnete Drehzahlinformation eine Steigung für die lineare Interpolation abgespeichert wird. Dies ermöglicht eine einfache und schnelle Berechnung des der augenblicklichen Temperatur entsprechenden Drehzahl-Sollwerts.

Für den Betrieb des Motors sehr vorteilhaft ist die Weiterbildung gemäß Anspruch 52, bei welcher der erfasste für die Temperatur kennzeichnende Wert mit einem bei einer vorhergehenden Erfassung erfassten, für die Temperatur kennzeichnenden Wert verglichen wird, und eine Änderung des zur Vorgabe der Solldrehzahl dienenden Werts nur vorgenommen wird, wenn entweder die Temperatur zugenommen hat, oder wenn sie um einen vorgegebenen Mindestwert abgenommen hat. Dies bewirkt einen ruhigen Lauf des Motors ohne häufige Drehzahländerungen. Trotzdem wird durch die sofortige Drehzahlanpassung bei steigender Temperatur die Kühlung bei hohen Temperaturen jederzeit sicher gestellt.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:

Fig. 1      ein Prinzipschaltbild einer erfindungsgemäßen Anordnung,

Fig. 2      eine beispielhafte Darstellung einer Ausführungsform der Erfindung,

Fig. 3      die Pinbelegung des μC COP 842 CJ,

Fig. 4      ein Schaltbild, welches die Bauteile für die A/D-Wandlung und die Verarbeitung des Hallsignals zeigt,

Fig. 5      ein Flußdiagramm der A/D-Wandlung,

Fig. 6      den Aufbau eines für die A/D-Wandlung verwendeten Zählers,

Fig. 7      ein Zeitdiagramm zum Ablauf der A/D-Wandlung,

Fig. 8      eine Kennlinie mit Hysterese,

Fig. 9      ein Flußdiagramm für eine Hysteresefunktion,

Fig. 10      ein Flußdiagramm für eine Sensorabrißfunktion

Fig. 11      eine Beispieldefinition für eine Kennlinie mit vier Definitionspunkten,

Fig. 12      eine Tabelle der Definitionspunkte der Kennlinie aus Fig. 11,

Fig. 13      ein Flußdiagramm für die Berechnung der Solldrehzahl aus der Kennliniendefinition,

Fig. 14      ein Kennlinie mit einem für eine bestimmte Temperatur interpolierten Punkt,

Fig. 15      ein Flußdiagramm mit einer Variante der Berechnung der Solldrehzahl aus der Kennliniendefinition,

Fig. 16      eine Darstellung eines Hallsignals und zugeordneter Motorsignale,

Fig. 17      ein Flußdiagramm der Hall-Interruptroutine,

Fig. 18      ein Schaltbild mit für die Ansteuerung eines EEPROMS und den Zugang über einen Bus wichtigen Teilen,

Fig. 19      ein Schaltbild mit für die Regelung und den Antrieb des Elektromotors wichtigen Teilen,

Fig. 20            ein Flußdiagramm für den prinzipiellen Ablauf der Regelung der Drehzahl,

Fig. 21            ein Flußdiagramm der Berechnung des Stellwertes und des Vorzeichens für die Regelung aus Fig. 20,

Fig. 22A bis 22D    eine Darstellung der Regelung für einen Motor mit der richtigen Drehzahl,

Fig. 23A bis 23E    eine Darstellung der Regelung für einen Motor mit zu niedriger Drehzahl,

Fig. 24A bis 24E    eine Darstellung der Regelung für einen Motor mit zu hoher Drehzahl,

Fig. 25            einen Gesamtablauf der Regelung,

Fig. 26            die Darstellung einer bevorzugten Ausführungsform eines Funktionsmanagers,

Fig. 27            ein in dem Funktionsmanager verwendetes Funktionsregister,

Fig. 28            eine für den Funktionsmanager modifizierte A/D-Wandlungsroutine, und

Fig. 29            eine für den Funktionsmanager modifizierte Regelungsroutine.

**Übersicht Kennlinienfunktion**

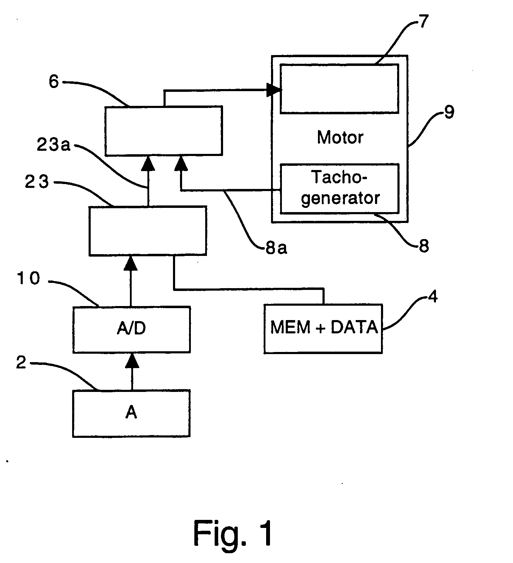

**Fig. 1** zeigt eine Prinzipdarstellung einer erfindungsgemäßen Anordnung. Ein Treiber 7 eines Motors 9 wird durch einen Drehzahlregler 6 gesteuert. Der Regler 6 erhält einen Istwert 8a der Drehzahl des Motors 9 von einem Tachogenerator 8, einen Sollwert 23a erhält er von einer Kennlinienfunktion 23. Die Kennlinienfunktion 23 berechnet, ausgehend von einer durch einen A/D-Wandler 10 digital gewandelten, ursprünglich analogen Größe A 2, den Sollwert 23a für den Drehzahlregler 6 mit Hilfe von in einem Speicher 4 gespeicherten Stützwerten einer Kennlinie "MEM + DATA", wobei die nicht durch die Stützwerte vorgegebenen Werte durch Interpolation berechnet werden.

**Übersicht Elektromotor**

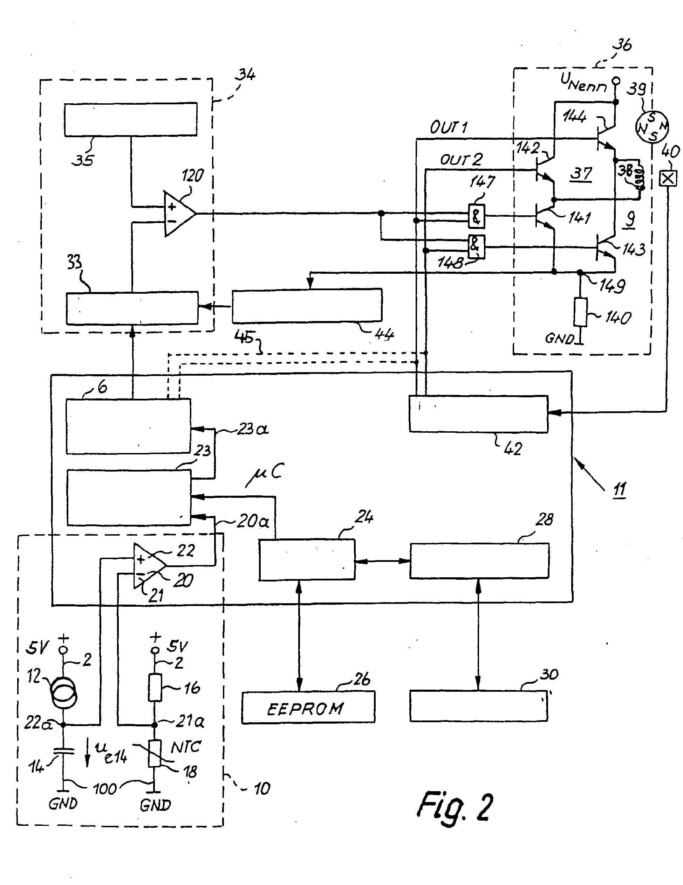

**Fig. 2** zeigt eine Übersicht über ein bevorzugtes Ausführungsbeispiel eines erfindungsgemäßen Elektromotors. Dieser wird gesteuert von einem Mikrocontroller ($\mu$C) 11. Der Analog-Digital-Wandler (A/D-Wandler) 10 ist unter Verwendung eines im $\mu$C 11 befindlichen Komparators 20 aufgebaut und ermöglicht eine Digitalisierung der über einen NTC-Widerstand 18 detektierten Temperatur. Der Komparator 20 hat einen Minuseingang 21, der im folgenden auch als CP- oder CMPIN- bezeichnet wird, und er hat einen Pluseingang 22, der im folgenden auch als CP+ oder CMPIN+ bezeichnet wird. Diese Eingänge können durch das Programm des $\mu$C 11 gesteuert werden, wie das nachfolgend beschrieben wird.

Ein konstanter Widerstand 16 ist in Reihe mit dem NTC-Widerstand 18 zwischen einer positiven Leitung 2 und Masse (GND) 100 angeschlossen. Ihr Verbindungspunkt 21a ist mit dem Minuseingang 21 verbunden.

Ebenso ist eine Konstantstromquelle 12 in Reihe mit einem Kondensator 14 zwischen der positiven Leitung 2 und Masse 100 angeschlossen, und ihr Verbindungspunkt 22a ist mit dem Pluseingang 22 des Komparators 20 verbunden.

Das Potential am Minuseingang 21 wird bestimmt durch die Temperatur am NTC-Widerstand 18, dessen Widerstandswert mit steigender Temperatur abnimmt, so daß dieses Potential mit steigender Temperatur sinkt.

Das Potential am Pluseingang 22 wird bestimmt durch die Spannung $u_{C14}$ am Kondensator 14. Wenn der Pluseingang 22 programmgesteuert mit Masse 100 verbunden wird, wird $u_{C14} = 0$, und wenn anschließend der Pluseingang 22 auf einen hochohmigen Zustand ("Tristate") umgeschaltet wird, wird der Kondensator 14 über die Konstantstromquelle 12 mit einem Konstantstrom aufgeladen, so daß $u_{C14}$ linear ansteigt.

Wenn das Potential am Punkt 22a das Potential am Punkt 21 a erreicht hat, wird der Komparator 20 an seinem Ausgang 20a auf HIGH umgeschaltet. Die Zeit für die Ladung des Kondensators 14, ausgehend von $u_{C14} = 0V$ bis zum Umschalten des Ausgangs 20a auf HIGH ist also ein Maß für die Temperatur. Diese Zeit wird im $\mu$C 11 gemäß einer frei wählbaren Kennlinie in einen Sollwert für die Drehzahl des Motors 9 ungesetzt.

Hierzu dient die Kennlinienfunktion 23. Diese bestimmt aus dem vom A/D-Wandler 10 digitalisierten Temperaturwert die Motor-Solldrehzahl 23a. Hierfür erhält sie über eine EEPROM-Funktion 24 Wertevorgaben aus einem nichtflüchtigen Speicher, hier einem EEPROM 26. Das EEPROM 26 kann über eine Kommunikationsfunktion 28 und ein Businterface 30 Werte für eine neue Kennlinie erhalten, um das Temperaturverhalten des Motors zu ändern.

Die Kennlinienfunktion 23 gibt die ermittelte Solldrehzahl 23a an den Drehzahlregler 6 weiter, welcher die Motorbestromung steuert. Dies kann z.B. über eine Steuerung eines Pulsweitenmodulation-Generators (PWM-Generators) 34 oder eine Blocksteuerung 45 geschehen. Zu der Blocksteuerung wird beispielhaft auf DE 444 1 372.6 verwiesen.

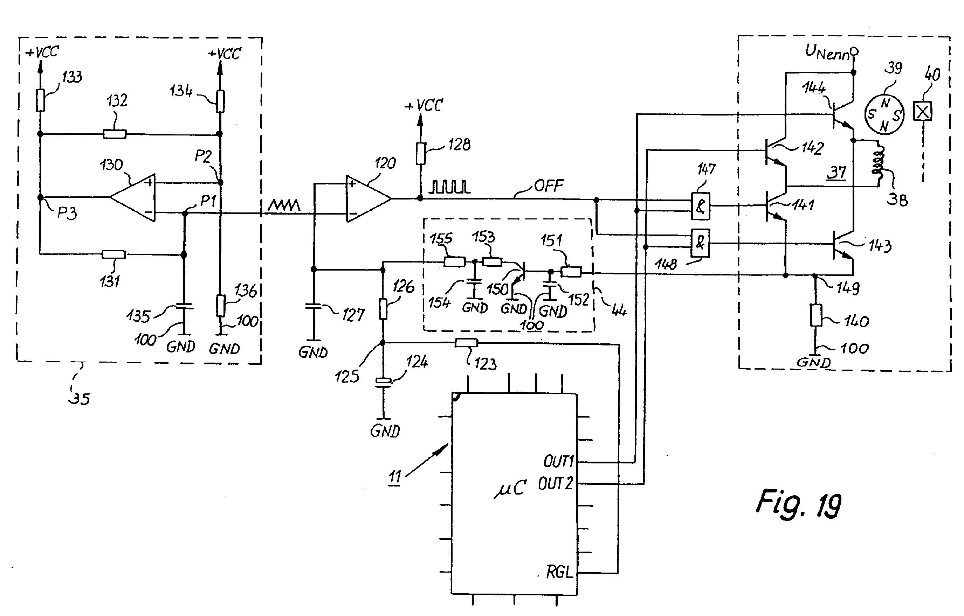

Der PWM-Generator 34 weist ein durch den Drehzahlregler geregeltes Stellsignal 33, einen Dreieckssignalgeber 35 und einen Komparator 120 auf. Für die Funktionsweise eines beispielhaften PWM-Generators 34 wird auf Fig. 19 verwiesen.

Als einfaches Beispiel ist in Fig. 2 ein elektronisch kommutierter Motor 9 mit einer einzigen Phase 38 dargestellt. Die Bestromung dieser Phase 38 geschieht durch eine Transistorendstufe 36, hier in Form einer Vollbrücke 37. Ein Hallgenerator 40 liefert einer Antriebsfunktion 42 Information über die augenblickliche Stellung des Rotors 39. Die Antriebsfunktion 42 sorgt für die richtige Kommutierung des Motors 9 und den sicheren Betrieb, z.B. bei Überlastung des Motors 9.

Eine Strombegrenzung 44 vermindert die Bestromung der Endstufe 36, falls der Strom in der einzigen Phase 38 zu hoch wird, z.B. beim Start des Motors.

Am Ende der Beschreibung sind für die in den einzelnen Figuren verwendeten elektronischen Bauteile bevorzugte Werte angegeben. Der Leser wird hierauf verwiesen.

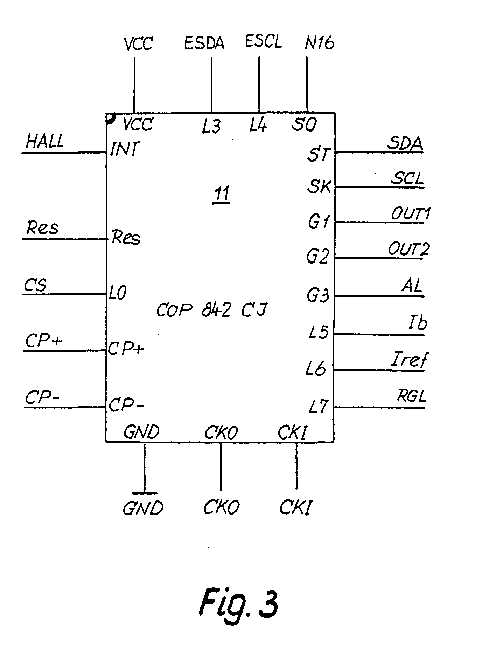

**Fig. 3** zeigt die Pinbelegung des beim Ausführungsbeispiel verwendeten Mikrokontrollers ($\mu$C) 11 vom Typ COP 842 CJ der Firma National Semiconductors. Die Beschriftung innerhalb des $\mu$C 11 entspricht der Beschriftung des Herstellers, die äußere Beschriftung der jeweiligen Leitungen zeigt die hauptsächlich in der Anmeldung verwendeten Bezeichnungen. Zur Kennzeichnung der Lage ist links oben ein schwarzer Viertelkreis eingezeichnet, der sich in den folgenden Figuren wiederfindet.

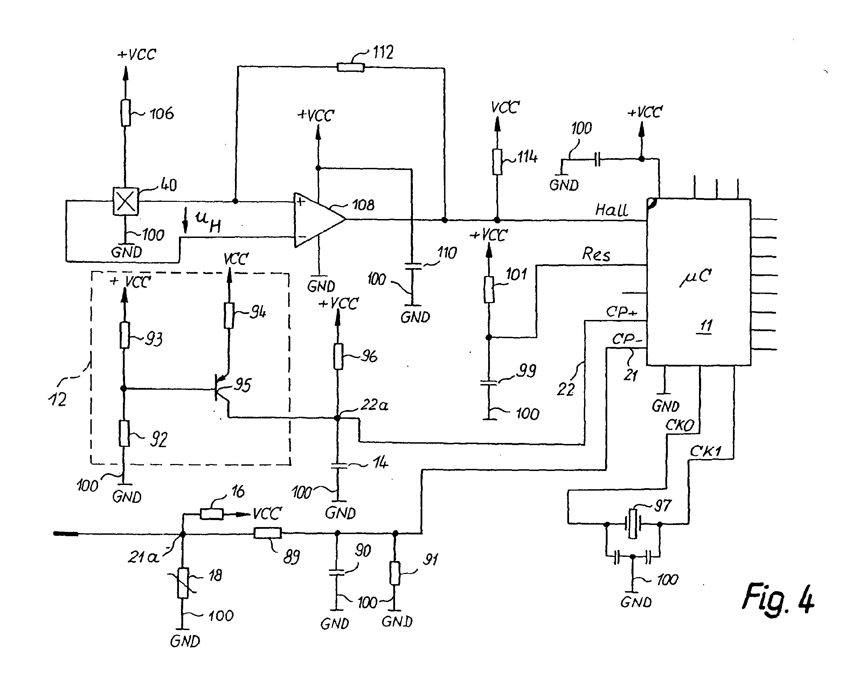

**Fig. 4** zeigt ein detailliertes Schaltbild des A/D-Wandlers 10 (Fig. 1 und 2) mit den Bauteilen für die A/D-Wandlung und die Verarbeitung des Hallsignals vom Hall-Sensor 40. Das Hallsignal liefert den Istwert der Motordrehzahl.

Ein Schwingquarz 97, der an die Anschlüsse CK0 und CK1 (vgl. Fig. 3) des $\mu$C 11 angeschlossen ist, gibt dessen Taktfrequenz vor, z.B. 10 MHz. Der Reset-Eingang Res (Fig. 3) ist über einen Kondensator 99 mit Masse 100 und über einen Widerstand 101 mit +$V_{cc}$ verbunden. Diese beiden Bauelemente erzeugen in der üblichen Weise beim Einschalten einen Power-Up-Reset.

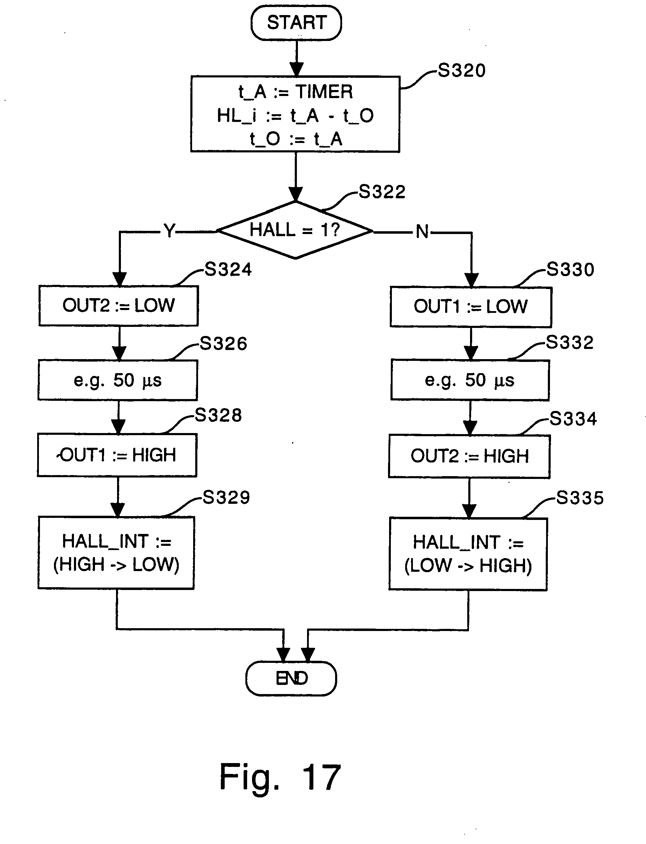

Der Hallgenerator 40, z.B. vom Typ HW101A, ist zur Stromversorgung über einen Widerstand 106 mit + Vcc, und mit Masse 100, verbunden. Sein Ausgangssignal $u_H$ wird den beiden Eingängen eines Komparators 108 (z.B. LM2901D) zugeführt, dessen $V_{cc}$-Eingang ein Siebkondensator 110 zugeordnet ist. Der Ausgang des Komparators 108 ist über einen Rückführwiderstand 112 mit dem positiven Eingang des Komparators 108 und über einen sogenannten Pullup-Widerstand 114 mit +Vcc verbunden. Weiterhin ist der Ausgang des Komparators 108 direkt mit dem Port Hall (Fig. 3) des Mikroprozessors 12 verbunden, so daß man an diesem ein vom Rotormagneten 39 gesteuertes Hallsignal erhält. Dieses Signal hat immer während einer Rotordrehung von 180° el. den Wert HALL = 0, und während der anschließenden Drehung von 180° el. den Wert HALL = 1. Seine Auswertung wird nachfolgend anhand von Fig. 17 erläutert. Jede Änderung von HALL = 1 zu HALL = 0, oder umgekehrt, bewirkt einen Interruptvorgang im $\mu$C 11.

Der NTC-Widerstand 18 des A/D-Wandlers 10 ist auf seiner einen Seite an Masse 100 angeschlossen. An seiner anderen Seite ist er mit dem Widerstand 16 verbunden, welcher auf seiner anderen Seite mit +Vcc verbunden ist. Die Verbindung 21 a zwischen dem NTC-Widerstand 18 und dem Widerstand 16 ist über einen Schutzwiderstand 89 und ein aus einem Kondensator 90 und einem Widerstand 91 bestehendes Siebglied an den Ausgang CP- (Fig. 3) des $\mu$C 11 angeschlossen. Der Kondensator 14 ist an seiner einen Seite mit Masse 100 verbunden, an seiner anderen Seite mit einem Widerstand 96, welcher seinerseits mit +Vcc verbunden ist. Die Verbindung 22a zwischen dem Kondensator 14 und dem Widerstand 96 ist mit der Konstantstromquelle 12 und dem Eingang CP+ verbunden. Die Konstantstromquelle 12 weist einen pnp-Transistor 95 (z.B. BC8568) auf, dessen Basisspannung durch Widerstände 92 und 93 festgelegt ist und dessen Strom auf der Emitterseite durch einen Widerstand 94 begrenzt wird.

### A/D-Wandlung

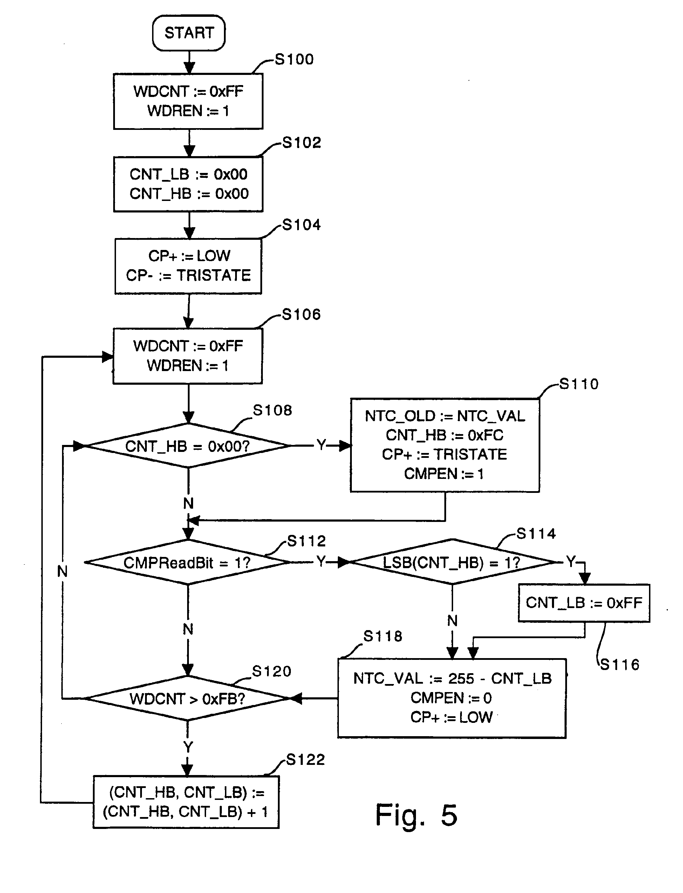

**Fig. 5** zeigt ein Flußdiagramm der A/D-Wandlung.

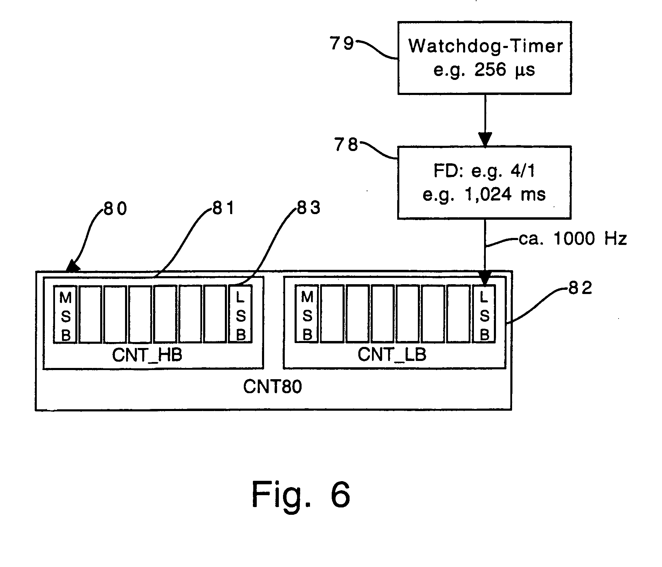

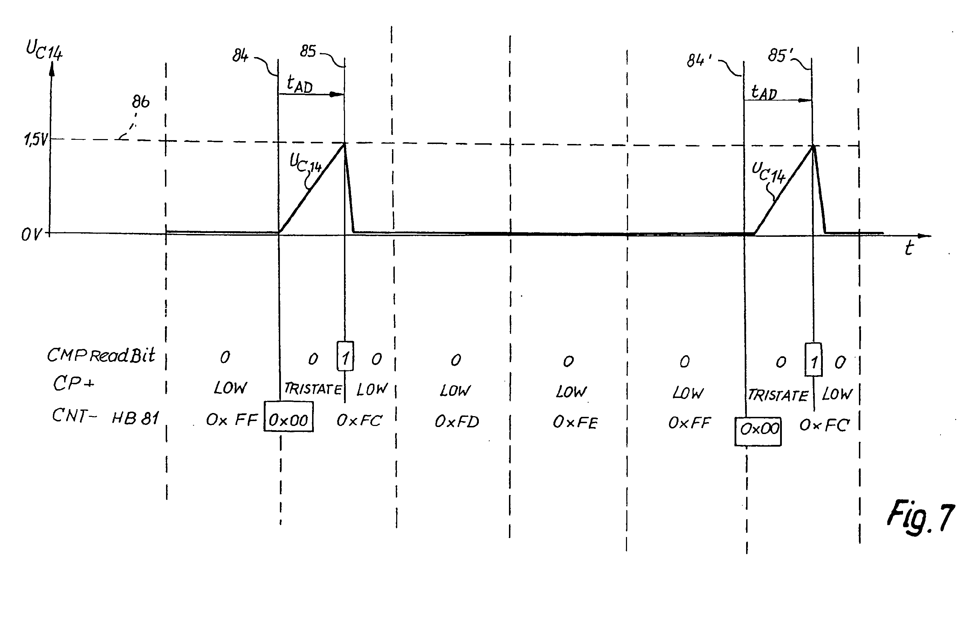

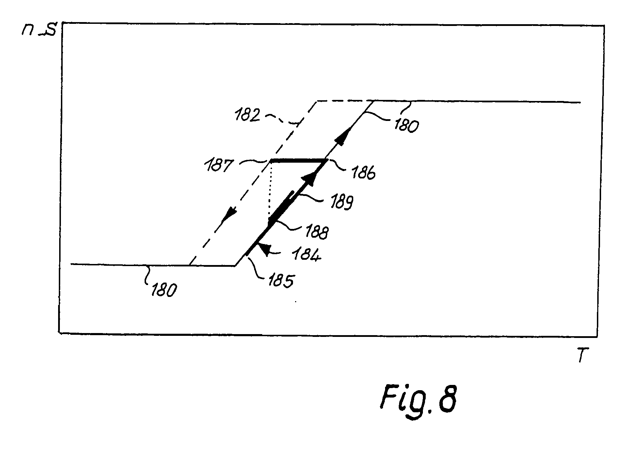

Im Schritt S100 der Fig. 5 wird ein Watchdog-Timer WDCNT 79 (Fig. 6) des $\mu$C 11 mit einem Hexadezimalwert 0xFF geladen (Hexadezimalwerte werden durch ein vorangestelltes 0x gekennzeichnet) und durch das Setzen des Bits WDREN auf 1 gestartet. Der Watchdog-Timer WDCNT 79 wird in einem Modus betrieben, in dem er in festen Zeitschritten seinen Wert dekrementiert und beim Erreichen von Null einen internen Reset im $\mu$C 11 auslöst. Um diesen Resetvorgang zu verhindern, muß der Watchdog-Timer WDCNT 79 von dem Programm periodisch nachgeladen werden. Dies bewirkt eine erhöhte Sicherheit, da der $\mu$C 11 z.B. bei einem Absturz des Programms nicht nachgeladen wird und deshalb automatisch einen Reset erhält und von neuem startet (Watchdog-Funktion).

In S102 werden die beiden Zählerregister CNT_LB 82 und CNT_HB 81 (Fig. 6) auf 0 gesetzt.

Die Eingänge CP- und CP+ des Komparators 20 (vgl. Fig. 2 und Fig. 3) werden in S104 konfiguriert. CP+ wird auf LOW (niedrig, Masse) gesetzt, so daß der Kondensator 20 entladen wird. CP- wird auf TRISTATE gesetzt, so daß eine von dem Widerstand 16 und NTC-Widerstand 18 bestimmte Spannung an CP- anliegt. Der Zustand TRISTATE eines Ports bedeutet, daß der Port sich weder wie +Vcc noch wie Masse 100 verhält, sondern isoliert ist.

Die mit dem Watchdog-Timer WDCNT 79 gebildete Hauptschleife beginnt in S106. Der Watchdog-Timer WDCNT 79 wird (wie in S100) mit dem Wert OxFF geladen und durch WDREN := 1 gestartet. Nach dem Durchlaufen der im folgenden beschriebenen Schritte S108 bis S118 wird in S120 überprüft, ob der Watchdog-Timer WDCNT 79 bereits den Wert 0xFB erreicht hat, also viermal dekrementiert worden ist. Ist dies der Fall (Y = YES/JA), so wird der aus den beiden Bytes CNT_LB 82 und CNT_HB 81 gebildete Zähler CNT80, den man als (CNT_HB, CNT_LB) darstellen kann (vgl. Fig. 6), in S122 inkrementiert und zu S106 zurückgesprungen. War in S120 der Watchdog-Timer WDCNT 79 größer als 0xFB, so erfolgt ein Sprung zurück zu S108. Da der Watchdog-Timer 79 in 256 μs-Schritten dekrementiert, entsprechen diese vier Dekrement-Schritte bis 0xFB einer Zeit von 1024 μs. Der aus CNT_LB 82 und CNT_HB 81 gebildete Zähler CNT80 hat also eine Auflösung von 1024 μs = 1,024 ms.

**Fig. 6** zeigt hierzu schematisch den Aufbau des aus CNT_LB 82 und CNT_HB 81 gebildeten Zählers CNT80. Die beiden 8 Bit-Zähler CNT_HB 81 und CNT_LB 82 werden zusammen als 16 Bit-Zähler CNT80 verwendet. Hierbei ist CNT_LB 82 das niedrige Wort (low byte) und CNT_HB 81 das hohe Wort (high byte). Das niedrigste Bit jedes Bytes ist jeweils mit LSB bezeichnet, und das höchste Bit mit MSB. Jedes Byte hat acht Bits.

Der Watchdog-Timer WDCNT 79 erniedrigt sich z.B. alle 256 μs um 1. Durch die Frequenzteilung von z.B. 4: 1 in S106 und S120, Fig. 5, wird der Zähler CNT80 alle 1,024 ms inkrementiert. Dies entspricht einer Frequenz von ca. 1000 Hz. Findet bei dem Inkrementieren des CNT_LB 82 ein Überlauf statt, d.h. das CNT_LB 82 hat den Wert 0xFF und wird inkrementiert, so erhält das CNT_LB 82 den Wert 0x00, und ein Überlaufbit (carry bit) wird gesetzt. Nach dem Inkrement des CNT_LB 82 wird zum CNT_HB 81 eine Null unter Berücksichtigung des Überlaufbits addiert, d.h. bei jedem 256. Inkrement des CNT_LB 82 wird das CNT_HB 81 inkrementiert, und das CNT_HB 81 hat so eine Auflösung von ca. 256 ms und kann deshalb einen maximalen Zeitwert von ca. 65,5 s darstellen. Der Zähler CNT80, der aus den beiden 8-Bit-Zählern CNT_HB 81 und CNT_LB 80 zusammengesetzt ist, wirkt so als ein 16-Bit-Zähler, der, jeweils nach 4 Dekrement-Schritten des Watchdog-Timers WDCNT 79, um 1 inkrementiert wird.

Obwohl CNT_LB 82 und CNT_HB 81 zusammen als ein Zähler CNT80 wirken, haben sie mehrere unterschiedliche Funktionen:

• Das CNT_LB 82 dient bei der A/D-Wandlung als Zähler für die Zeit, die benötigt wird, um den Kondensator 14 über den Transistor 95 so weit aufzuladen, daß die Spannung an CP+ 22 so hoch ist wie die durch den NTC-Widerstand 18 temperaturabhängige Spannung an CP- 21, d.h. sein Zählerstand ist ein Maß für die Temperatur des NTC-Widerstands 18.

• Das CNT_HB 81 dient als Zähler für die Zeit zwischen aufeinanderfolgenden A/D-Wandlungen. Diese Zeit kann z.B. auf eine Sekunde eingestellt werden.

• Das niederwertigste Bit (LSB) 83 des CNT_HB 81 dient zusätzlich als Anzeige eines Überlaufs des CNT_LB 81 während der A/D-Wandlung.

Im folgenden werden die in dem unteren Teil der Watchdog-Timer-Schleife (Fig. 5) ablaufenden Schritte S108 bis S120 beschrieben.

In S108 wird überprüft, ob das CNT_HB den Wert 0x00 hat. Falls dies der Fall ist, wird in S110 der vorige NTC-Wert NTC_VAL in NTC_OLD gesichert, das CNT_HB wird auf 0xFC gesetzt, CP+ 22 wird auf TRISTATE gesetzt, so daß der Kondensator 14 über den mittels der Widerstände 92, 93 und 94 als Konstantstromquelle geschalteten Transistor 95 (Fig. 4) geladen wird und so die Spannung an CP+ 22 linear ansteigen läßt, und der Komparator 20 wird durch CMPEN := 1 gestartet. Das Register CNT_LB hat nach dem Umspringen von CNT_HB auf 0x00 ebenfalls den Wert 0x00, so daß es als Zähler für die Zeit wirkt, bis die an CP+ 22 liegende Spannung so groß wie die an CP- 21 liegende Spannung ist.

Das Setzen des Registers CNT_HB auf 0xFC gibt die Zeit zwischen den einzelnen A/D-Wandlungen vor. Da das Register CNT_HB eine Auflösung von ca. 256 ms hat, wird jeweils nach vier Inkrementen (0xFC auf 0xFD auf 0xFE auf 0xFF auf 0x00), also nach ungefähr einer Sekunde, eine neue A/D-Wandlung vorgenommen. Anstatt 0xFC kann ein anderer Wert gewählt werden, er muß aber größer als 0x00 sein, um nicht sofort eine neue A/D-Wandlung zu starten, und sein niederwertigstes Bit 83 (Fig. 6) muß 0 sein, um es als Anzeige eines Überlaufs des CNT_LB 82 während der A/D-Wandlung nutzen zu können.

Bis die durch den von der Konstantstromquelle 12 (Fig. 4) geladenen Kondensator 14 gegebene Spannung an CP+ 22 die durch den NTC-Widerstand 18 temperaturabhängige Spannung an CP- 21 erreicht hat, wird in Fig. 5 der untere Teil über S108 und S112 durchlaufen, ohne weitere Schritte auszuführen. Erreicht die Spannung an CP+ 22 die Spannung an CP- 21, so schaltet der Komparator sein Komparator-Lesebit (CMPReadBit) auf HIGH, und von dem Vergleich in S112 wird zu S114 gesprungen.

In S114 wird anhand des niederwertigsten Bits 83 (LSB) von CNT_HB 81 überprüft, ob während der A/D-Wandlung ein Überlauf des CNT_LB 82 stattgefunden hat. Der Wertebereich 0x00 bis OxFF des CNT _LB 82 soll möglichst vollständig für die D/A-Wandlung ausgenutzt werden. Deshalb kann es innerhalb der Fertigungstoleranzen der Komparatorbeschaltung vorkommen, daß für Werte im oberen Bereich, also für niedrige Temperaturen, noch ein Überlauf stattfindet. Dieser kann deshalb erkannt werden, weil das niederwertigste Bit 83 beim Setzen des CNT_HB 81 in S110 den Wert 0 erhalten hat. Hat ein Überlauf des CNT_LB stattgefunden, so hat das niederwertigste Bit 83 des CNT_HB 81 den Wert 1. Ist dies der Fall, so erhält CNT_LB in S116 den maximalen Wert OxFF zugewiesen, ansonsten erfolgt von S114 direkt ein Sprung zu S118.

In S118 wird der Wert von CNT_LB invertiert und im Register NTC_VAL abgelegt. Das Invertieren macht aus CNT_LB den Wert (255 - CNT_LB), so daß jetzt ein kleiner NTC-Wert NTC_VAL einer niedrigen Temperatur und ein großer NTC-Wert NTC_VAL einer hohen Temperatur entspricht. Der Komparator wird durch CMPEN := 0 gestoppt und CP+ 22 wird auf LOW gesetzt, damit der Kondensator 14 vor der nächsten A/D-Wandlung entladen wird. Letztere findet statt, wenn das CNT_HB den Wert Null erreicht.

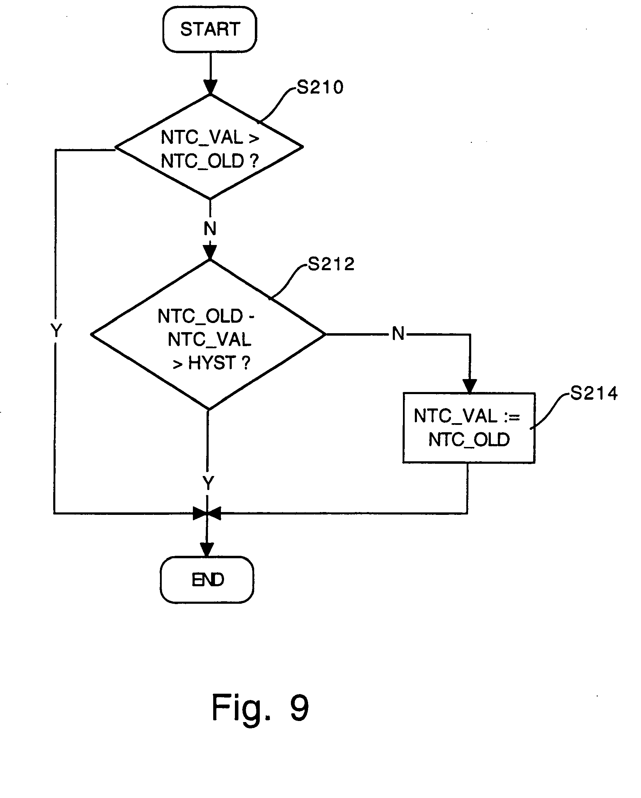

Fig. 7 zeigt ein Zeitdiagramm der A/D-Wandlung. CNT_HB 81 dient als Zähler für die Zeit zwischen den einzelnen A/D-Wandlungen. Es hat am Anfang den Wert 0xFF, und CP+ ist auf LOW, der Kondensator 14 ist also entladen.

Zum Zeitpunkt 84 bzw. 84' springt CNT_HB 81 auf 0x00 um. Damit startet die A/D-Wandlung. CNT_HB 81 wird auf 0xFC gesetzt, um den Zeitraum bis zur nächsten A/D-Wandlung festzulegen, und CP+ wird auf TRISTATE gesetzt, um ein Aufladen des Kondensators 14 zu ermöglichen.

Zum Zeitpunkt 85 bzw. 85' erreicht die Spannung $U_{C14}$ des Kondensators 14 das Potential 86 am Knotenpunkt 21a, und die Variable CMPReadBit ändert ihren Zustand von 0 auf 1. Jetzt wird geprüft, ob ein Überlauf von CNT_LB 82 stattgefunden hat, der Komparator 20 (Fig. 2) wird ausgeschaltet, und CP+ wird auf LOW geschaltet, um den Kondensator 14 wieder zu entladen. Die nächste A/D-Wandlung geschieht beim Inkrement des CNT_HB von 0xFF auf 0x00, also zum Zeitpunkt 84'.

**Hysterese- und Sensorabrißfunktion:**

Der eigentlichen Berechnung der Solldrehzahl durch die Kennlinienfunktion sind eine Hysterese- und eine Sensorabrißfunktion vorgeschaltet.

Fig. 8 zeigt eine Kennlinie 180 (durchgezogene dünne Kurve) mit Hysterese 182 (gestrichelte dünne Kurve), in die ein Beispielverlauf 184 von Temperatur und Solldrehzahl eingetragen ist (dicke durchgezogene Kurve).

Die Solldrehzahl n_s verläuft bei zunehmender Temperatur T von dem Punkt 185 entlang der durchgezogenen Kennlinie 180 bis zum Punkt 186.

Bei abnehmender Temperatur bleibt die Solldrehzahl so lange konstant, bis die gestrichelte Hysteresekurve bei Punkt 187 erreicht wird. Daraufhin springt die Solldrehzahl auf die für diese Temperatur durch die durchgezogene Kennlinie vorgegebene Solldrehzahl bei Punkt 188.

Bei ansteigender Temperatur verläuft die Solldrehzahl entlang der Kennlinie 180 vom Punkt 188 zum Punkt 189, an dem der Beispielverlauf 184 endet. Die Hysterese wirkt so einem Schwingen der Drehzahl entgegen, weil bei abnehmender Temperatur die Drehzahl erst dann reduziert wird, wenn die Temperatur um einen bestimmten Mindestwert gefallen ist.

Fig. 9 zeigt das Hysterese-Flußdiagramm. Die Hysterese wird dadurch erreicht, daß der vom A/D-Wandler digitalisierte Temperaturwert NTC_VAL mit dem vorherigen und zuvor abgespeicherten Wert NTC_OLD verglichen wird. Ist NTC_VAL größer als NTC_OLD, so wird er für die Berechnung der Solldrehzahl n_s verwendet (S210), weil die Temperatur zugenommen hat. Ist die Antwort "Nein", so wird in Schritt S212 NTC_VAL von NTC_OLD subtrahiert. Ist die Differenz größer als ein Hysteresewert HYST, so wird die Hystereseroutine verlassen und mit dem Wert NTC_VAL weitergearbeitet (S212). Ansonsten wird dem Wert NTC_VAL der alte Wert NTC_OLD zugeordnet (S214). Der Hysteresewert HYST kann bei der Konfiguration des Motors in den RAM-Bereich des $\mu$C 11 geladen werden und ist somit ebenfalls frei programmierbar. Der Motor erhält durch die Hysterese-Funktion einen ruhigen Drehzahlverlauf.

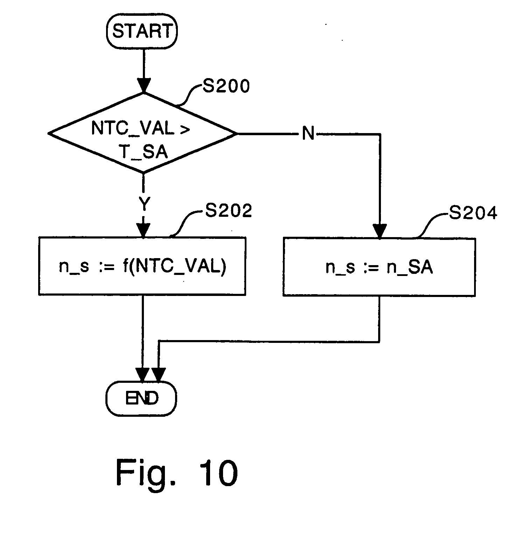

Fig. 10 zeigt ein Flußdiagramm einer Sensorabrißfunktion. Die Sensorabrißfunktion ist eine Sicherheitsfunktion, die bei einer Beschädigung des NTC-Widerstands 18 (Fig. 4) bzw. von dessen Anschlüssen, einem sogenannten Sensorabriß, eine sogenannte Sensorabriß-Drehzahl als Solldrehzahl vorgibt. Ist z.B. der NTC-Widerstand defekt, und hat er den Widerstandswert Unendlich, so erhält man einen sehr kleinen NTC-Wert NTC_VAL. Daher wird ein Sensorabriß-Temperaturwert T_SA definiert, und bei allen NTC-Werten NTC_VAL, die kleiner als T_SA sind, wird davon ausgegangen, daß ein Sensorabriß vorliegt.

Der aus der zuvor beschriebenen A/D-Wandlung erhaltene NTC-Wert NTC_VAL wird in S200 mit dem Sensorabriß-Temperaturwert T_SA, der ebenfalls 1 Byte groß ist (z.B. T_SA := 0x38), verglichen. Ist NTC_VAL größer, so wird die Berechnung der Solldrehzahl n_s wie in den folgenden Figuren beschrieben fortgesetzt (S202). Ist NTC_VAL jedoch kleiner, liegt also ein Sensorabriß vor, so wird die komplette Solldrehzahlberechnung übersprungen, und für die Solldrehzahl n_s wird eine Sensorabriß-Drehzahl n_SA verwendet (S204), gewöhnlich die maximale Drehzahl des Motors.

Die Werte T_SA und n_SA werden bei der Konfiguration des Motors in den RAM-Bereich des μC 11 geladen und sind somit frei programmierbar.

**Kennlinienfunktion**

Der durch die A/D-Wandlung ermittelte NTC-Wert NTC_VAL wird nun in eine Solldrehzahl umgerechnet.

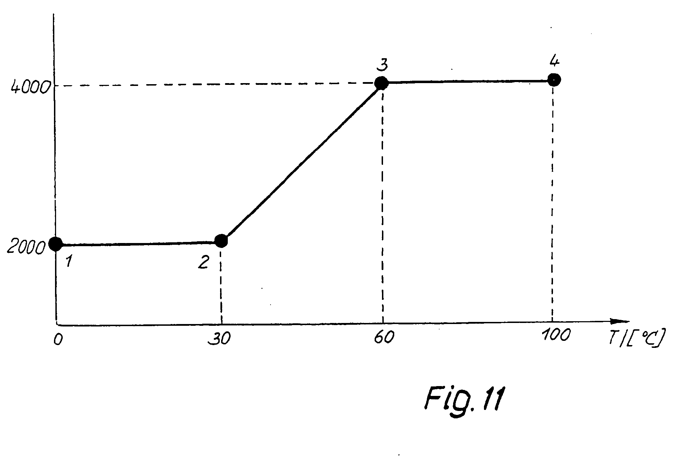

**Fig. 11** zeigt beispielhaft eine durch vier Kennliniendefinitionspunkte (ausgefüllte Punkte mit den Zahlen 1 bis 4) definierte Kennlinie n = f(T). Z.B. entspricht eine Temperatur von 0° C (Punkt 1) einer Drehzahl von 2000 U/min, ebenso eine-Temperatur von 30° C (Punkt 2). Eine Temperatur von 60° C (Punkt 3) entspricht 4000 U/min, ebenso eine Temperatur von 100° C (Punkt 4). Zwischen den Temperatur-Drehzahl-Punkten 1, 2, 3 und 4 wird bei diesem Ausführungsbeispiel linear interpoliert. Die Berechnung der benötigten Zwischenpunkte geschieht durch den μC 11.

Die Definition einer Kennlinie durch wenige Kennliniendefinitionspunkte spart viel Speicher und erlaubt eine einfache Änderung der Kennlinie durch Speicherung von Punkten mit neuen Werten. Falls eine Sensorabrißfunktion verwendet wird, wird der Definitionspunkt mit der niedrigsten Temperatur an der auf die Sensorabrißtemperatur T_SA (vgl. S200 in Fig. 10) folgenden Temperatur T_SA + 1 gewählt. Falls keine Sensorabrißfunktion verwendet wird, wird der Definitionspunkt mit der niedrigsten Temperatur als kleinste meßbare Temperatur (Kennlinientemperaturwert 0x00, entspricht z.B. einer Temperatur von -62 °C) gewählt.

Der Definitionspunkt mit der höchsten Temperatur kann als die höchstmögliche Temperatur gewählt werden (0xFF bei einem Byte Speicherplatz). Eine Alternative besteht darin, für alle Temperaturwerte, die größer als der letzte Definitionspunkt sind, die Drehzahl des letzten Definitionspunkts zu wählen. Dann kann der letzte Definitionspunkt auch einen niedrigeren Temperaturwert als 0xFF haben.

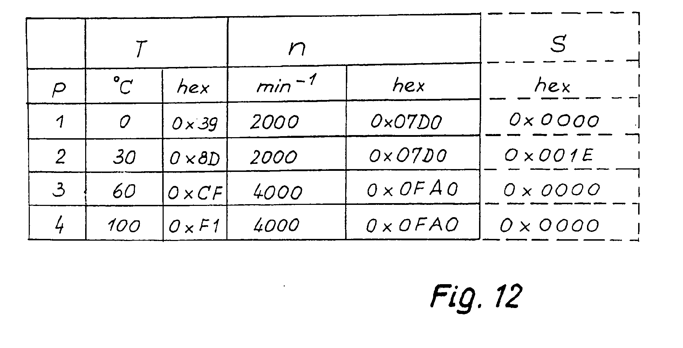

**Fig. 12** zeigt die für jeden Kennliniendefinitionspunkt P der Kennlinie aus Fig. 11 die gespeicherten Temperatur- und Drehzahlwerte. Die Werte sind jeweils in physikalischen und programminternen Größen angegeben. Jeder Temperaturwert T belegt ein Byte Speicher, der zugehörige Drehzahlwert n zwei Byte. Evtl. wird noch eine zugehörige Steigung $S = \Delta n / \Delta T$ mit zwei Byte gespeichert, um die Interpolation zu beschleunigen. Das höchstwertigste Bit der zwei Bytes der Steigung dient dabei als Vorzeichen-Bit, so daß auch negative Steigungen möglich sind. Die Zuordnung der programminternen Temperaturspeicherwerte (0x00 bis 0xFF) zu der physikalischen Außentemperatur hängt von der Beschaltung des A/D-Wandlers ab. So kann z.B. ein Temperaturspeicherwert von 0x10 auch einer negativen physikalischen Temperatur von -10 °C entsprechen.

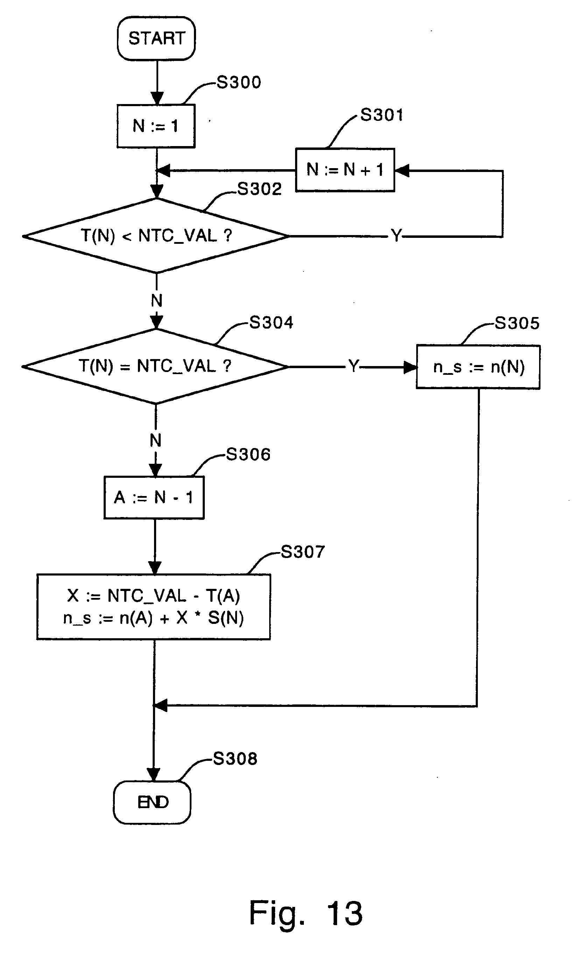

**Fig. 13** zeigt ein Flußdiagramm für die Solldrehzahl-Berechnungsroutine. Die Kennliniendefinitionspunkte besitzen in diesem Beispiel jeweils einen Temperaturwert, einen Drehzahlwert und eine Steigung, die für den Bereich von dem Kennliniendefinitionspunkt bis zu dem folgenden Kennliniendefinitionspunkt gilt. Beim Starten des μC 11 werden die Temperaturwerte T (Fig. 12) aus dem EEPROM 26 ausgelesen und in den RAM-Bereich des μC 11 eingelesen, um einen schnellen Zugriff zu ermöglichen. Die Drehzahlwerte und die Steigungswerte verbleiben (aus Gründen des begrenzten RAM-Speichers) im EEPROM 26 und werden bei Bedarf von dort geladen. Im EEPROM 26 sind alle Temperaturwerte hintereinander in einem Block gespeichert, die Drehzahl- und gegebenenfalls Steigungswerte hintereinander in einem anderen Block. Falls genügend RAM-Speicher vorhanden ist, so können auch die Drehzahl und die Steigung in den RAM-Speicher des μC 11 geladen werden.

Beim Sprung in die Solldrehzahl-Berechnungsroutine wird in S300 der Zähler N auf 1 gesetzt. Die Temperaturwerte sind als Tabelle T(N) abgelegt, und in S302 wird verglichen, ob der N-te Temperaturwert T(N) kleiner als NTC_VAL ist. Ist dies der Fall, so wird nach S301 gesprungen, und N wird um 1 erhöht. Daraufhin wird wieder nach S302 gesprungen. Ist NTC_VAL nicht mehr größer als T(N), so weiß man, daß entweder NTC_VAL = T(N) ist, oder zwischen T(N) und T(N-1) liegt. In S304 wird auf Gleichheit geprüft. Besteht Gleichheit, so wird der Solldrehzahl n_s der Solldrehzahlwert n(N) des Kennliniendefinitionspunktes N zugeordnet und an das Ende gesprungen.

Ist in S304 nicht T(N) = NTC_VAL, so wird in S306 der Variablen A der Wert N - 1 zugeordnet, A entspricht also dem dem Kennliniendefinitionspunkt N vorhergehenden Kennliniendefinitionspunkt.

In S307 wird dann schließlich die Solldrehzahl n_s für NTC_VAL berechnet.

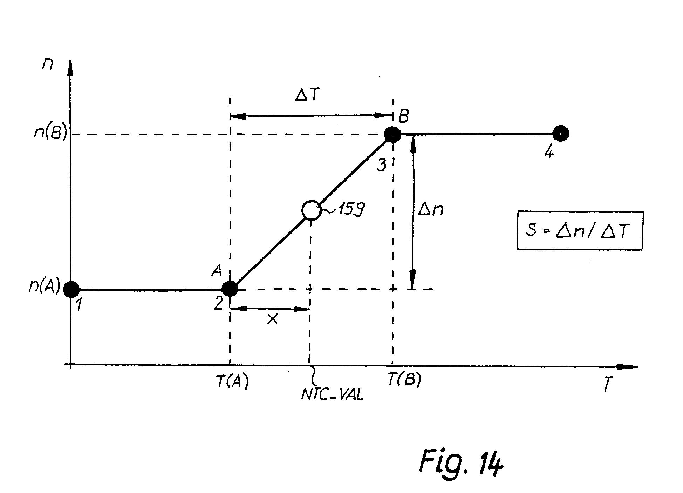

**Fig. 14** zeigt hierzu ein Beispiel für einen Wert NTC_VAL 159, der zwischen dem zweiten und dem dritten Definitionspunkt einer Kennlinie liegt. A hat also den Wert 2.

Der Abstand X zwischen dem Temperaturwert T(A) und NTC_VAL wird durch Subtraktion ermittelt (S307). Die zu NTC_VAL zugehörige Solldrehzahl n_s wird durch Addition des Produkts aus Steigung S(N) und X zu der Drehzahl n(A) von Punkt A ermittelt, also $n\_S := n(A) + X * S(N)$.

Eine mögliche Variante zu dieser Art der Interpolation besteht darin, die Steigung nach links, also von dem jeweiligen Kennliniendefinitionspunkt N in Richtung des Kennliniendefinitionspunkts N - 1, zu definieren. In diesem Fall geschieht die Berechnung von n_s (S306, S307) nicht von Punkt N - 1 aus, sondern von Punkt N.

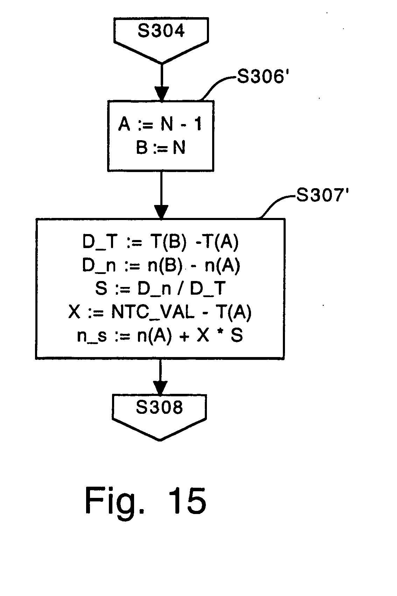

**Fig. 15** zeigt die Berechnung der Solldrehzahl für den Fall, daß bei den Kennliniendefinitionspunkten keine Steigung mit abgespeichert ist. Die Schritte S300 bis S305 aus Fig. 13 werden identisch ausgeführt. Falls in S304 jedoch nicht T(N)= NTC_VAL ist, so werden in S306' beide den NTC__VAL 159 (Fig. 14) umgebenden Kennliniendefinitionspunkte A := N- 1 und B := N definiert, siehe wieder Fig. 14. In S307' wird nun die Steigung S zwischen Punkt A und B von Punkt A aus berechnet. Die Temperaturdifferenz D_T ($\Delta$T) wird durch Subtraktion von T(A) von T(B) berechnet, die Drehzahldifferenz D_n ($\Delta$n) durch Subtraktion von n(A) von n(B) und die Steigung S durch Division von D_n durch D_T. Der Abstand X zwischen NTC_VAL und dem Temperaturwert T(A) und die Solldrehzahl n_S werden wie in Fig. 13 berechnet.

Aus der Beschreibung von Fig. 15 ist ersichtlich, daß das Abspeichern einer Steigung zu jedem Kennliniendefinitionspunkt einen Teil der Berechnungen in S307 (Fig. 13) erspart und damit auch Programm-Code und Programm-Abarbeitungszeit.

**Umrechnung der Solldrehzahl in eine "Hall-Länge" HL_s**

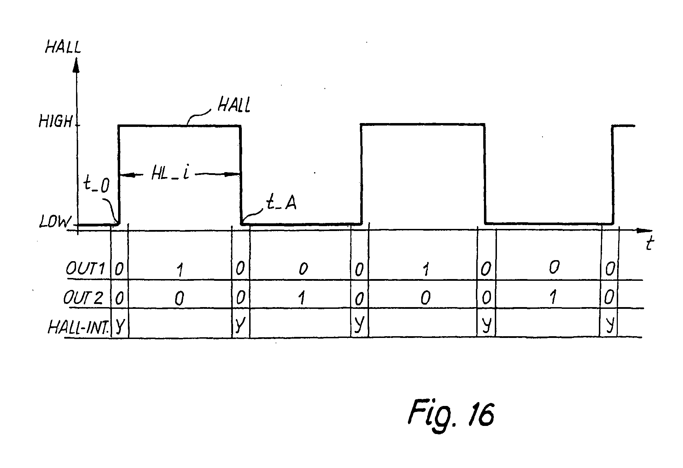

**Fig. 16** zeigt ein Diagramm mit dem Hallsignal HALL (Fig. 4), das am Port INT des $\mu$C 11 (Fig. 4) anliegt, den zugehörigen Werten für OUT1, OUT2 (Fig. 19) und den Zeitpunkten für das Auftreten der Hall-Interrupts. Anhand des Signals HALL wird die Kommutierung der Signale OUT1 und OUT 2 (Fig. 19) für die Steuerung des Motors 9 und die Berechnung der Ist-Hall-Länge HL_i vorgenommen, wie es hier in einer beispielhaften Ausführung gezeigt wird. Jeder Wechsel von HALL löst in dem $\mu$C 11 einen Hall-Interrupt aus, welcher in der Fig. 16 durch ein Y gekennzeichnet ist. Da die Kommutierung sehr präzise sein muß, damit der Motor ruhig läuft, hat dieser Interrupt Vorrang vor allen anderen Vorgängen im Motor, d.h. er unterbricht alle anderen, gerade laufenden Prozesse, wobei aber der gerade in Arbeit befindliche Befehl noch ausgeführt wird, anschließend die Befehlsfolge dieses Interrupts abläuft, und dann der zuvor unterbrochene Prozess wieder fortgesetzt wird.

**Fig. 17** zeigt eine beispielhafte Hall-Interruptroutine, die bei jedem Hall-Interrupt ausgeführt wird.

In S320 wird die Hall-Länge HL_i bestimmt. Ein aktueller Timerwert t_A wird aus einem Timer ausgelesen, und durch die Subtraktion des gespeicherten Timerwerts t_O vom Zeitpunkt des vorhergehenden Timer-Interrupts wird die Hall-Länge HL_i := t_A - t_O berechnet. Daraufhin wird der aktuelle Timerwert t_A in t_O gespeichert (S320). Die Auflösung des in diesem Ausführungsbeispiels verwendeten Timers ist 1 $\mu$s, die Hall-Länge HL_i liegt also in $\mu$s vor. Sie ist ein Maß für die Drehzahl des Motors 9.

In den folgenden Schritten wird die Kommutierung ausgeführt. In S322 wird geprüft, ob HALL = 1 (HIGH) ist. Ist HALL = 1, so wird in S324 OUT2 auf LOW gesetzt. Jetzt sind OUT1 und OUT2 auf LOW, und in S326 wird eine zeitliche Kommutierungslücke eingefügt, um bei der Kommutierung einen Kurzschluß in der Brückenschaltung 37 zu verhindern. Die Kommutierungslücke hat z.B. eine Dauer von 50 $\mu$s. In S328 wird OUT1 auf HIGH gesetzt. In S329 wird schließlich der Port HALL konfiguriert, bei welcher Flanke er einen Hall-Interrupt HALL_INT auslösen soll. Die Flanke kann entweder so eingestellt werden, daß bei dem Übergang HIGH nach LOW (fallende Flanke) ein Interrupt ausgelöst wird, oder aber bei dem Übergang von LOW nach HIGH (steigende Flanke). Da in dem Zweig S324 bis S329 das Hall-Signal auf HIGH ist, muß der Port HALL auf einen Interrupt bei fallender Flanke, also HIGH nach LOW eingestellt werden, damit beim nächsten Hall-Wechsel wieder ein Hall-Interrupt ausgelöst wird.

Ist in S322 HALL = 0 (LOW), so geschieht in S330 - S335 analog die umgekehrte Kommutierung und das umgekehrte Setzen von HALL_INT. Für die Realisierung einer zeitlichen Verschiebung der Kommutierungszeitpunkte wird auf DE 197 00 479.2 verwiesen.

Die Umrechnung der Solldrehzahl n_s mit der Einheit U/min in eine "Hall-Länge" HL_s wird im folgenden aufgezeigt. Für die Hall-Länge HL' in Sekunden gilt

$$HL' = T / P$$

mit der Periodendauer T für eine Rotordrehung in s und der Polzahl P des Rotors. Mit

$$T = 1 / f$$

$$f = n / 60$$

wobei f die Frequenz in Hz und n die Drehzahl in Umdrehungen pro Minute ist, ergibt sich

$$HL' = 60 \, [s] / (n/[min^{-1}] \, P)$$

Da die über den Hall-Sensor gemessene Hall-Länge in $\mu$s vorliegt, wird HL' zu HL_s renormiert

$$HL\_s = 1\,000\,000 \, HL'$$

Für P = 4, also einen vierpoligen Rotor, ergibt sich

$$HL\_s = 15\,000\,000 \, [\mu s] / (n / [min^{-1}]).$$

Der gewünschten Drehzahl n_s = 2870 min$^{-1}$ entspricht z.B. eine "Hall-Länge" HL_s von

$$HL\_s = 15\,000\,000 \, \mu s / 2870 = 5226 \, \mu s.$$

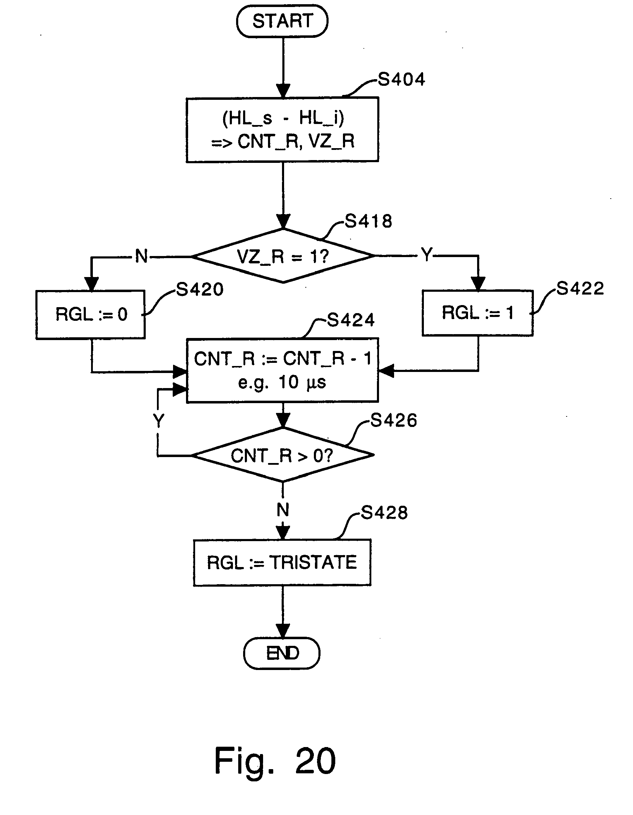

Die maschineninterne Hexadezimaldarstellung hierfür ist 0x146A. Zur Auswertung von HL_i und HL_s vergleiche Fig. 20.

**EEPROM-Funktion**

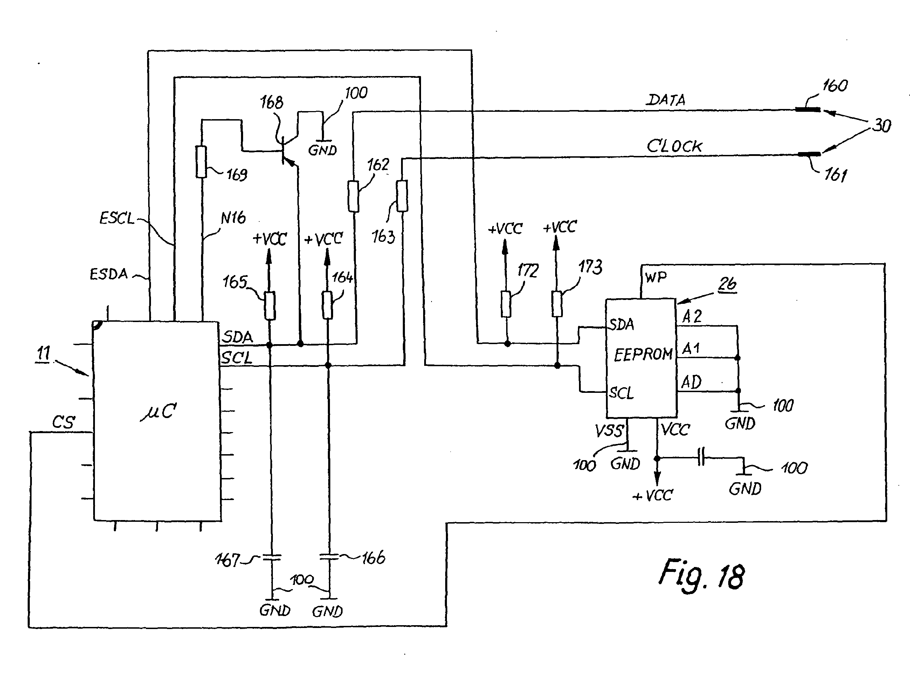

**Fig. 18** zeigt den Ausschnitt der Schaltung, der das EEPROM 26 und das Businterface 30 betrifft. Die Pinbelegung des $\mu$C 11 ist wieder Fig. 3 zu entnehmen. Gleiche oder gleich wirkende Teile wie in den vorhergehenden Figuren sind mit denselben Bezugszeichen bezeichnet wie dort. Das EEPROM 26 ist z.B. vom Typ "2-Wire Serial CMOS EEPROM AT24C01A" (ATMEL)

Das EEPROM 26 erhält an seinem Dateneingang SDA das Signal ESDA (Fig. 3) des $\mu$C 11 und an seinem Eingang SCL das Signal ESCL. Beide Leitungen sind über Widerstände 172, 173 mit +Vcc verbunden.

Der Schreibschutzeingang WP des EEPROM 26 ist mit dem Pin CS (Chip Select) des $\mu$C 11 verbunden. Ist CS auf HIGH, so ist das EEPROM 26 schreibgeschützt, ist CS auf LOW, so können Daten in das EEPROM 26 geschrieben werden. Die Anschlüsse VSS, AD, A1 und A2 des EEPROM 26 sind mit Masse 100 verbunden, und der Anschluß VCC des EEPROM 26 mit +Vcc.

Die Leitungen ESDA und ESCL stellen also den seriellen Bus zwischen dem $\mu$C 11 und dem EEPROM 26 dar, der als IIC-Bus betrieben werden kann.

Normalerweise wird das EEPROM 26 in der Fabrik einmal über das Businterface 30 programmiert, eine Neuprogrammierung ist jedoch jederzeit möglich. Auch kann das EEPROM 26 z.B. als Betriebsdatenspeicher dienen, z.B. für Einschaltzyklen, maximal aufgetretene Temperatur, Betriebsstunden und Fertigungsdaten.

Das Businterface 30 arbeitet mit einem IIC-Bus. Es verfügt über eine Datenleitung DATA mit einem Anschluß 160, die über einen Widerstand 162 an den Anschluß SDA des $\mu$C 11 angeschlossen ist. Vom Anschluß SDA führt ein Widerstand 165 zu +Vcc und ein Kondensator 167 zu Masse 100. Außerdem ist der Anschluß SDA mit dem Emitter eines pnp-Transistors 168 verbunden, dessen Kollektor mit Masse 100 und dessen Basis über einen Widerstand 169 mit dem Anschluß N16 des $\mu$C 11 verbunden sind.

Weiterhin hat das Businterface 30 eine Taktleitung CLOCK mit einem Anschluß 161, die über einen Widerstand 163 an den Anschluß SCL des $\mu$C 11 angeschlossen ist. Vom Anschluß SCL des $\mu$C 11 führt ein Widerstand 164 zu +Vcc und ein Kondensator 166 zu Masse 100.

Die Schaltung mit dem pnp-Transistor 168 dient dazu, sowohl den Ausgang N16 als auch den Eingang SCL des $\mu$C 11 mit der bidirektionalen Leitung DATA des IIC-Buses zu verbinden.

Für eine weitergehende Beschreibung des EEPROM 26, des Businterfaces 30 und deren Programmierung wird auf DE 198 26 458.5 verwiesen.

Ein Paßwortschutz kann dadurch verwirklicht werden, daß bei der Übertragung von zwei besonderen aufeinanderfolgenden Bytes von dem externen IIC-Bus 30 zu dem $\mu$C 11, z.B. den Bytes 0xFA und 0x4A, in dem $\mu$C 11 ein Bit B_ACCESS in einer Speicherstelle ACCESS gesetzt wird, und bei gesetztem B_ACCESS zusätzliche Funktionen zum Verändern von Parametern, zum Auslesen des EEPROM 26 und/oder zum Beschreiben des EEPROM 26 zur Verfügung stehen. So ist z.B. ein Schutz vor einem unerlaubten Ändern der Kennlinie durch den Kunden möglich.

Weiterhin kann über den Bus 30 ein Betriebsstundenzähler abgefragt werden. Dieser wird dadurch verwirklicht, daß beim Start des Lüfters ein aus drei Byte bestehender 24-Bit-Wert WRK_TIME aus dem EEPROM 26 in den μC 11 geladen wird, und bei jedem 10. Beginn einer A/D-Wandlung, also in dem vorherigen Beispiel jede 10. Minute, der 24-Bit-Zähler WRK_TIME um 1 inkrementiert und in das EEPROM 26 zurückgeschrieben wird. Der Wert WRK_TIME kann dann z.B. über den IIC-Bus 30 abgefragt werden. Das Abzählen von je 10 A/D-Wandlungen geschieht über einen weiteren Zähler WRK_10.

**Regelung des Motors**

**Fig. 19** zeigt den für Regelung und Antrieb des Motors wichtigen Teil der Schaltung. Die Belegung der Anschlüsse des μC 11 ist wieder Fig. 3 zu entnehmen. Die Ausgänge OUT1 und OUT2 des μC 11 steuern die als H-Brücke 37 geschalteten npn-Transistoren 141, 142, 143 und 144. Je nachdem, ob OUT1 auf HIGH und OUT2 auf LOW oder umgekehrt gesetzt sind, verläuft der Strom durch die Statorwicklung 38 in die eine oder die andere Richtung. Zwischen dem Umschalten sind OUT1 und OUT2 kurzzeitig beide auf LOW, um einen Kurzschluß in der Brücke 37 verhindern. Die Kommutierung erfolgt elektronisch, und die Lage des Rotors 39 wird über den Hallsensor 40 erfaßt, der bei Fig. 4 näher beschrieben ist.

Ein Ausgang RGL des μC 11 ist über einen Widerstand 123 an einen Kondensator 124 angeschlossen. Wird RGL auf HIGH gesetzt, so wird der Kondensator 124 aufgeladen, ist RGL auf LOW, so wird der Kondensator entladen, und ist RGL auf TRISTATE, so ist der Kondensator 124 von RGL abgekoppelt und hält seine Spannung. Ohne die Strombegrenzung 44, welche weiter unten beschrieben wird, könnte der Punkt 125 direkt mit dem Pluseingang des Komparators 120 verbunden werden. Ist der npn-Transistor 150 nicht leitend, die Strombegrenzung 44 also inaktiv, so stellt sich über den Widerstand 126 an einem kleineren Kondensator 127 die gleiche Spannung wie die des Kondensators 124 ein. Über den Ausgang RGL des μC 11 kann also die Spannung an dem Pluseingang des Komparators 120 beeinflußt werden.

An dem Minuseingang des Komparators 120 liegt ein durch einen Dreiecksoszillator 35 erzeugtes Dreiecksignal an. Der Dreiecksoszillator 35 weist einen Komparator 130 auf. Vom Ausgang P3 des Komparators 130 führt ein Mitkopplungswiderstand 132 zu dessen Pluseingang, und ebenso führt ein Gegenkopplungswiderstand 131 vom Ausgang P3 des Komparators 130 zum Minuseingang des Komparators 130. Ein Kondensator 135 liegt zwischen dem Minuseingang des Komparators 130 und Masse 100. Der Ausgang des Komparators 130 ist ferner über einen Widerstand 133 mit +Vcc verbunden. Der Pluseingang des Komparators 130 ist über zwei Widerstände 134 und 136 mit +Vcc bzw. Masse 100 verbunden.

Zur Erläuterung der Wirkungsweise des Dreiecksgenerators 35 sind in Fig. 19 drei Potentialpunkte P1, P2 und P3 angegeben. Beim Einschalten der Anordnung liegt P1 durch den entladenen Kondensator 135 auf Masse 100, P2 liegt über 134 an +Vcc und ist damit größer als P1. Der Komparatorausgang und damit P3 liegen deshalb auf HIGH. Dadurch wird der Kondensator 135 über die Widerstände 133 und 131 geladen, das Potential an P1 und damit das Dreieckssignal steigen an. Der Wert P2 ergibt sich aus

a) der Parallelschaltung der Widerstände 134, 133 und 132, und
b) dem unteren Spannungsteilerwiderstand 136.

Durch das Aufladen des Kondensators 135 wird schließlich P1 höher als P2, und dadurch schaltet der Ausgang P3 des Komparators 130 auf LOW, also Masse um. P3 geht also auf Null. Deshalb beginnt nun der Kondensator 135, sich über den Widerstand 131 und den Komparator 130 zu entladen, und dies ergibt den abfallenden Teil des Dreieckssignales. Der Wert P2 ergibt sich nun aus

a) der Parallelschaltung der Widerstände 132 und 136, und
b) dem Spannungsteilerwiderstand 134.

Fällt durch die Entladung des Kondensators 130 P1 unter P2, so schaltet der Komparator 130 wieder auf HIGH, an P3 liegt also wieder +Vcc. So entsteht ein Dreiecksignal mit z.B. 25 kHz.

Liegt die Spannung des Dreiecksignals am Minuseingang des Komparators 120 unter der des Referenzsignals am Pluseingang des Komparators 120, so ist der Ausgang OFF des Komparators 120 auf HIGH, und die unteren Transistoren 141 bzw. 143 können über die logischen UND-Glieder 147 bzw. 148 durch OUT1 bzw. OUT2 geschaltet werden. Liegt die Spannung des Dreieckssignals über der des Referenzsignals, so ist der Ausgang OFF des Komparators 120 auf LOW und damit kann die Statorwicklung 38 nicht bestromt werden.

Über die Spannung am Kondensator 124 und damit auch am Kondensator 127 wird also das sogenannte Tastverhältnis eingestellt, das Verhältnis der Dauer, die der Ausgang des Komparators 120 während einer Periode des Dreieckssignals auf HIGH ist zu einer ganzen Periode. Das Tastverhältnis kann zwischen 0 % und 100 % liegen. Ist die Motordrehzahl z.B. zu hoch, so wird der Kondensator 124 über RGL entladen und damit das Tastverhältnis verkleinert.

Das Ganze wird als Pulsweitenmodulation (PWM) bezeichnet. Der Pull-Up-Widerstand 128 dient dazu, den Open-Collector-Ausgang OFF des Komparators 120 bei HIGH auf +Vcc zu ziehen.

Um beim Einschalten des Motors den Motor starten zu können, wird der Kondensator 124 bei der Initialisierung eine vorgegebene Zeitdauer über RGL aufgeladen, damit die Spannung am Kondensator 127 den erforderlichen Mindestwert für das Einschalten der Brücke 37 erreicht.

Die Strombegrenzung 44 wird dadurch verwirklicht, daß der Strom in der Statorwicklung 38 über einen Meßwiderstand 140 zu Masse 100 fließt. Je höher der Strom durch den Widerstand 140 ist, desto höher ist die Spannung an ihm und damit auch das Potential am Punkt 149.

Erreicht das Potential an 149 einen bestimmten Wert, so wird der Transistor 150 leitend und reduziert die Spannung am Kondensator 127, und das Tastverhältnis am Ausgang des Komparators 120 wird dadurch kleiner. Der Widerstand 126 verhindert, daß der große Kondensator 124 bei einer Strombegrenzung mit entladen wird und beschleunigt die Strombegrenzung, da der kleine Kondensator 127 schnell entladen werden kann. Nach dem Ende der aktiven Strombegrenzung wird der kleinere Kondensator 127 durch den Kondensator 124 wieder aufgeladen und so auf dessen Spannung gesetzt. Der Widerstand 126 und der Kondensator 127 bewirken also eine Priorisierung der Strombegrenzung 44.

Die Strombegrenzung 44 weist ein Filterglied aus einem Widerstand 151 und einem Kondensator 152 gegen Masse, gefolgt von dem npn-Transistor 150, der bei einer genügend hohen Spannung an seiner Basis den Pluseingang des Komparators 120 auf Masse 100 zieht, auf. Dahinter folgt ein weiteres aus den Widerständen 153 und 155 und dem Kondensator 154 bestehendes Siebglied.

Für die Beschreibung einer alternativen Form der Strombegrenzung wird auf DE 198 26 458.5 verwiesen. Sie kann wie dort auch mit Hilfe eines Komparators aufgebaut werden und programmgesteuert sein.

**Regelroutine**

**Fig. 20** zeigt eine mit Hilfe des μC 11 verwirklichte Regelung der Motordrehzahl.

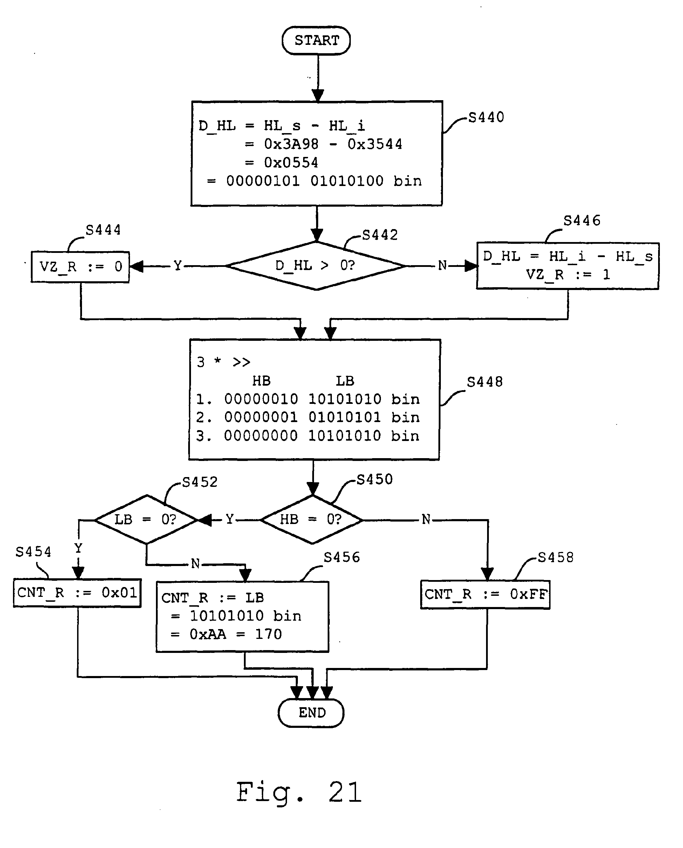

In S404 wird die Regeldifferenz aus den Hallängen HL_s und HL_i (vgl. Fig. 16) berechnet. Die Berechnung wird in Fig. 21 näher erläutert. Das Ergebnis ist eine positive Stellgröße CNT_R für die Größe (Betrag) der Regeldifferenz und ein Vorzeichen VZ_R, das angibt, ob der Motor zu schnell (VZ_R = 0) oder zu langsam (VZ_R=1) ist.

In S418 wird überprüft, ob VZ_R = 1 ist. Ist VZ_R = 1, so ist der Motor zu langsam, und der Kondensator 124 (Fig. 19) muß aufgeladen werden. Hierzu wird in S422 der Port RGL (Fig. 3, Fig. 19) durch RGL := 1 auf HIGH gesetzt. Analog wird in S420 der Port RGL durch RGL := 0 auf LOW gesetzt, falls VZ_R = 0 ist, der Motor also zu schnell ist.

Nach dem Setzen des Ports RGL wird beim Beispiel nach Fig. 20 eine zu dem Betrag CNT_R der Regeldifferenz proportionale Zeit gewartet, während der der Kondensator 124 und damit auch der Kondensator 127 (Fig. 19) aufgeladen bzw. entladen werden.

Hierzu wird in S424 eine Schleife begonnen. CNT_R wird um 1 vermindert, und es wird z.B. 10 μs lang gewartet. Daraufhin wird in S426 überprüft, ob CNT_R > 0 ist. Ist dies der Fall, so ist der als Schleifenzähler verwendete Wert CNT_R noch nicht abgearbeitet, und es wird zurück nach S424 gesprungen. Ist in S426 CNT_R = 0, so ist die Schleife insgesamt CNT_R mal durchlaufen worden, wobei mit CNT_R der in S404 berechnete ursprüngliche Wert CNT_R gemeint ist.

Nach der Beendigung der Schleife (S424 und S426) wird in S428 der Port RGL wieder auf TRISTATE gesetzt, und das Aufladen bzw. Entladen des Kondensators 124 ist beendet.

**Fig. 21** zeigt an einem Zahlenbeispiel die Berechnung der Stellgröße CNT_R und des Vorzeichens VZ_R aus der Regeldifferenz, also S404 aus Fig. 20. In S440 wird die Differenz D_HL von der der Solldrehzahl entsprechenden "Halllänge" HL_s und der gemessenen Halllänge HL_i (Fig. 16) berechnet. Als Beispiel wird eine Solldrehzahl von 1000 U/min angenommen, welche einer "Halllänge" von 15000 μs und damit einer Zweibytedarstellung 0x3A98 entspricht. Die Istdrehzahl beträgt hier 1100 U/min, was einer Halllänge von 13636 μs und einer Zweibytedarstellung 0x3544 entspricht. Die Differenz D_HL beträgt damit 0x0554 und ist in S440 auch binär dargestellt.

In S442 wird überprüft, ob die Differenz D_HL positiv ist. Ist dies der Fall, so wird in S444 VZ_R auf Null gesetzt, ansonsten wird in S446 D_HL aus der umgekehrten Differenz (HL_i - HL_s) berechnet und ist damit positiv, das Vorzeichen VZ_R wird auf 1 gesetzt.

In S448 wird D_HL drei mal nach rechts geshiftet, wobei in das höchstwertigste Bit (MSB) von HB immer eine Null nachgeschoben wird. Das Shiften geschieht, da die Stellgröße CNT_R nur 1 Byte groß sein darf und die Regeldifferenz D_HL oft zu groß ist. Ein dreimaliges Shiften nach rechts entspricht einer ganzzahligen Division durch 8 ohne Berücksichtigung des Restes. Bei dem Shiften geht die Information der untersten drei Bits des LB verloren. Das Shiften des Beispiels aus S440 wird in Binärdarstellung gezeigt.

In S450 wird überprüft, ob nach dem dreimaligen Shiften nach rechts HB = 0 ist. Ist dies nicht der Fall, so ist das geshiftete D_HL immer noch größer als 1 Byte, und CNT_R wird in S458 auf den maximalen. Wert 0xFF (binär: 11111111) gesetzt. Ist in S450 HB = 0, so wird in S452 überprüft, ob auch LB= 0 ist. Ist LB ungleich Null, so wird in S456 CNT_R auf LB gesetzt. In unserem obigen Beispiel wird CNT_R auf OxAA gesetzt, dezimal entspricht dies 170. War in S452 LB = 0, so ist es möglich, daß trotzdem vor dem Shiften in S448 eine Regeldifferenz in den unteren drei Bits von LB bestanden hat. Um nicht auf Dauer eine kleine Regeldifferenz zu behalten, wird deshalb CNT_R in S454 auf 0x01 gesetzt. Das Vorzeichen VZ_R und der Wert CNT_R am Ende der Routine der Fig. 21 werden in Fig. 20 für die Regelung verwendet.

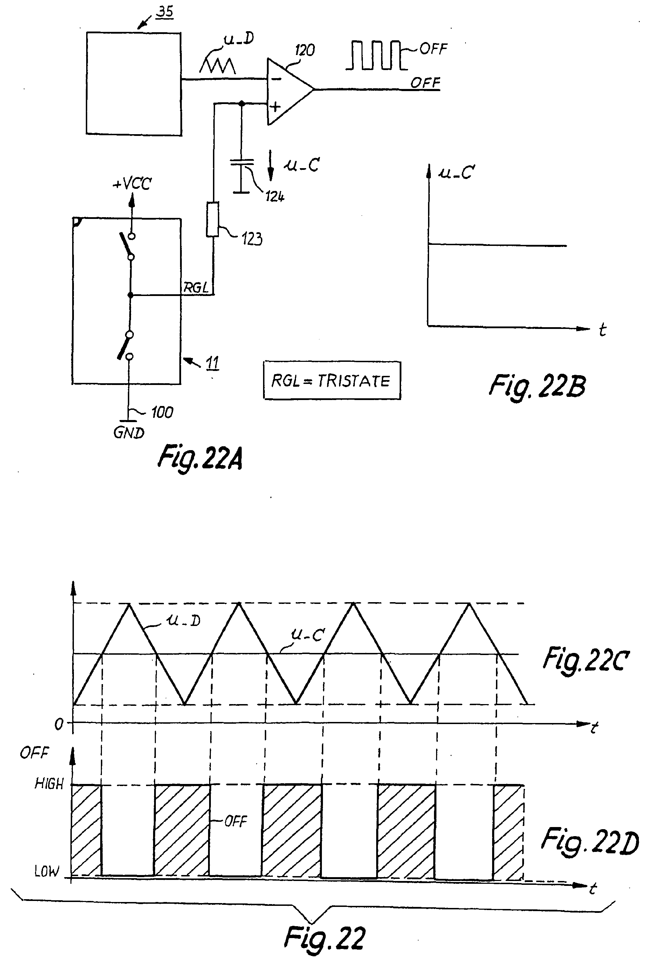

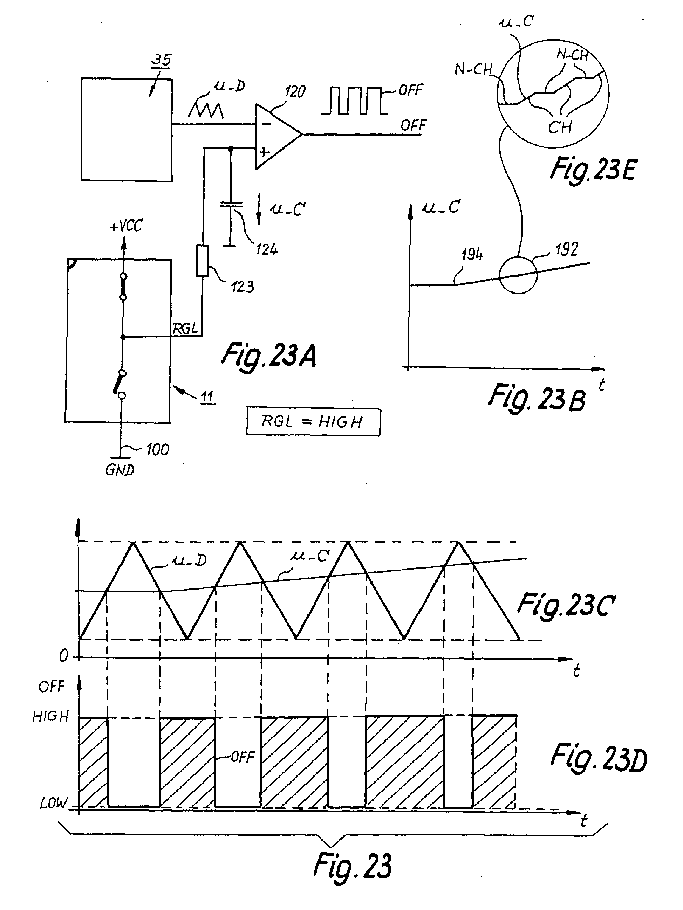

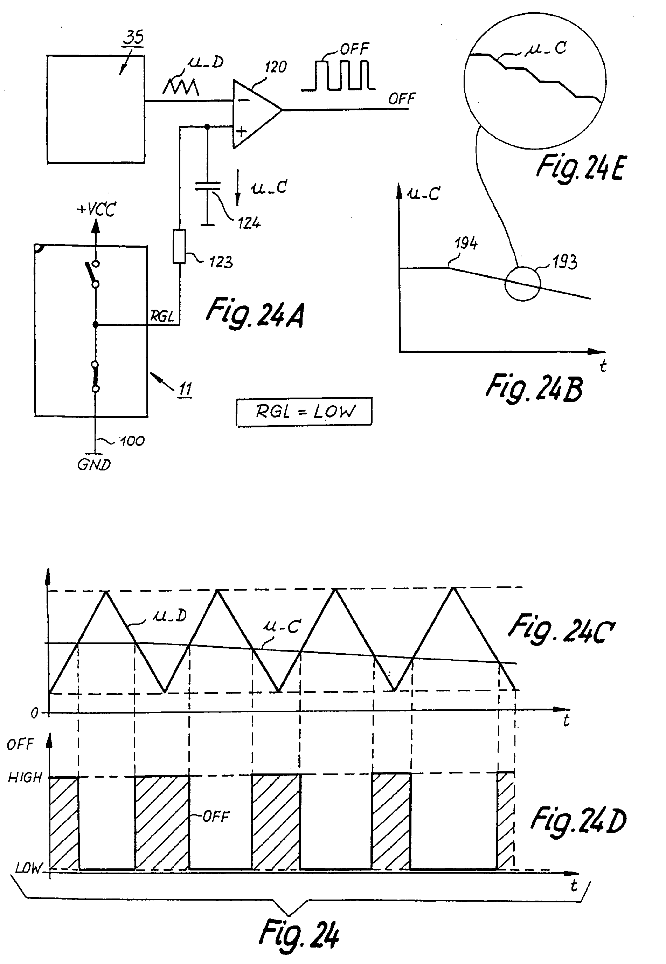

**Fig. 22** zeigt das PWM-Signal OFF für den Fall, daß RGL = TRISTATE ist, **Fig. 23** zeigt das Signal OFF beim Aufladen des Stellkondensators 124 und **Fig. 24** das Signal OFF beim Entladen des Stellkondensators 124.

Fig. 22A, 23A und 24A zeigen die Schaltung der Regelung. Der Dreiecksoszillator 35 ist an dem Minuseingang des Komparators 120 angeschlossen. Der Ausgang RGL ist mit einem Ersatzschaltbild im Inneren des μC 11 für den jeweiligen Zustand RGL = TRISTATE, RGL = HIGH und RGL = LOW dargestellt. Über den Strombegrenzungswiderstand 123 wird durch RGL der Stellkondensator 124 unverändert gelassen (Fig. 22), aufgeladen (Fig. 23) bzw. entladen (Fig. 24). Am Ausgang OFF liegt das PWM-Signal mit einem durch die Spannung U_C bestimmten Tastverhältnis vor.

Fig. 22B, 23B und 24B zeigen die zeitliche Veränderung der Spannung U_C bei dem jeweiligen Zustand des Ausgangs RGL, wobei in Fig. 23B und 24B RGL zum Zeitpunkt 194 von RGL = TRISTATE auf HIGH bzw. LOW umgeschaltet werden.

Fig. 22C, 23C und 24C zeigen jeweils in einem Spannungs-/Zeit-Diagramm die Spannung U_D des durch den Dreiecksoszillator 35 erzeugten Dreieckssignals und die Spannung U_C des Stellkondensators 124 bei dem jeweiligen Zustand des Ausgangs RGL. Es ist zu beachten, daß hier der Augenblickswert der Dreiecksspannung U_D stets größer ist als der Wert 0.

Fig. 22D, 23D und 24D zeigen das aus Fig. 22C, 23C und 24C resultierende PWM-Signal OFF. In Fig. 22D bleibt das Tastverhältnis über die Zeit gleich, in Fig. 23D wird es bei zunehmendem U_C größer, und in Fig. 24C wird es bei abnehmendem U_C kleiner.

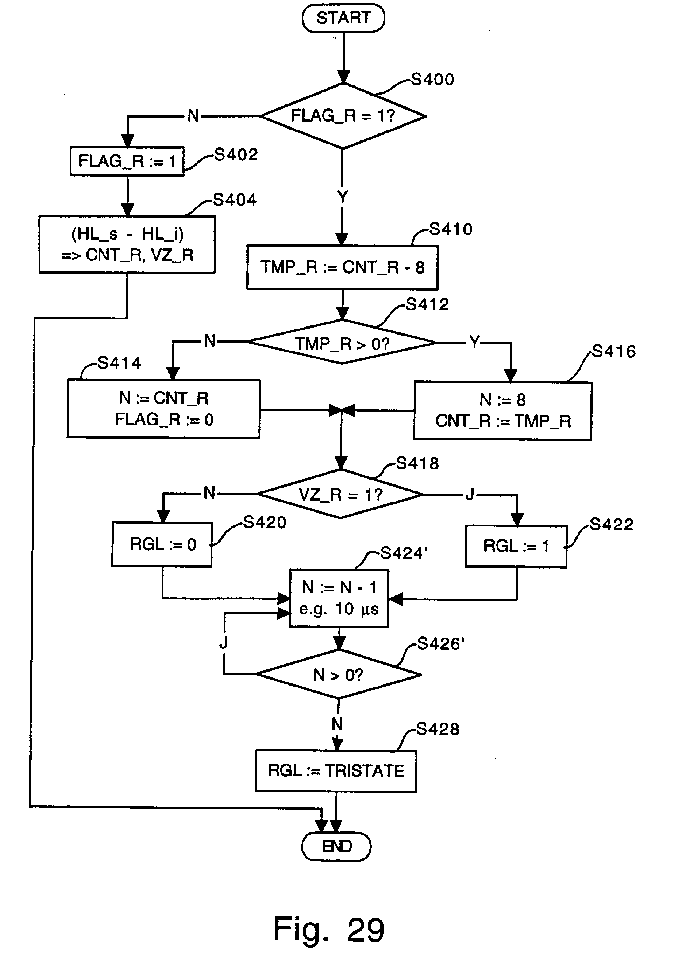

Fig. 23E zeigt einen vergrößerten Ausschnitt 192 aus Fig. 23B. Das Ansteigen der Spannung U_C des Kondensators wird immer wieder unterbrochen. Dies ist auf das in Fig. 29 beschriebene Aufteilen der Regelung in kleine zeitliche Portionen oder Häppchen zurückzuführen. In Fig. 29 wird bei jedem Aufruf der Regelung RGL auf HIGH gesetzt und der Kondensator 124 wird kurzzeitig aufgeladen. Vor dem Verlassen der Regelung wird RGL wieder auf TRISTATE gesetzt und die Spannung U_C am Kondensator 124 bleibt konstant. In Fig. 23E ist das Aufladen mit CH bezeichnet, und die konstanten Intervalle sind mit N-CH bezeichnet.

Fig. 24E zeigt analog einen vergrößerten Ausschnitt 193 aus Fig. 24B für den Fall, daß der Kondensator 124 entladen wird, ebenfalls für den Ablauf gemäß Fig. 29.

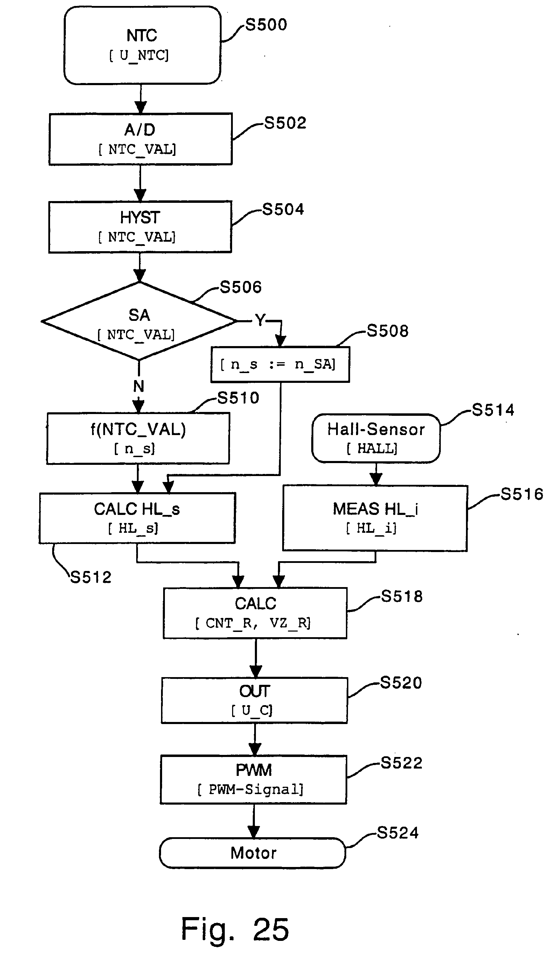

**Fig. 25** zeigt den Gesamtablauf der Regelung. Die Temperatur wird in S500 über den temperaturabhängigen NTC-Widerstand NTC detektiert (Fig. 2 und 4). Über die A/D-Wandlung A/D in S502 wird aus der Spannung U_NTC am NTC-Widerstand ein digitaler Temperaturwert NTC_VAL (Fig. 2, 4, 5, 6 und 7). In S504 wird eine Hysterese HYST der Kennlinie verwirklicht (Fig. 8 und 9). In einer Sensorabrißfunktion SA in S506 wird überprüft, ob ein Defekt des A/D-Wandlers A/D vorliegt (Fig. 10). Bei einem Sensorabriß wird die Berechnung der Solldrehzahl umgangen, in S508 eine feste Sensorabrißdrehzahl n_SA gewählt und zu der Hall-Längenberechnung "CALC HL_s" in S512 gesprungen. Mit dem NTC-Wert NTC_VAL aus der Hysteresefunktion HYST wird in S510 über eine Kennlinienfunktion "f(NTC_VAL)"eine Solldrehzahl n_s berechnet (Fig. 11, 12, 13, 14 und 15). Die Solldrehzahl wird in S512 durch eine Hall-Längenberechnung "CALC HL_s" in eine "Hall-Länge" HL_s umgerechnet. Die IstDrehzahl des Motors wird in S514 über einen Hall-Sensor detektiert, der ein Signal HALL liefert (Fig. 4, 16 und 17). Über die durch das Signal HALL ausgelösten Hall-Interrupts wird in S516 ("MEAS HL_i") die Hall-Länge HL_i zwischen zwei Hall-Interrupts gemessen (Fig. 16 und 17). Mittels der beiden Hall-Längen für den Soll- und den Istwert berechnet der Regler "CALC" in S518 einen Stellwert CNT_R für die Größe der Differenz von HL_s und HL_i und ein Vorzeichen VZ_R (Fig. 21). Anhand von CNT_R und VZ_R wird in OUT die Spannung U_C eines Kondensators 124 in S520 erhöht bzw. erniedrigt (Fig. 19 und 20). Über die Spannung U_C des Kondensators 124 wird in PWM S522 das Tastverhältnis des PWM-Signals eingestellt (Fig. 19). Über das Tastverhältnis des PWM-Signals wird in S524 schließlich die Geschwindigkeit des Motors geregelt.

**Funktionsmanager**

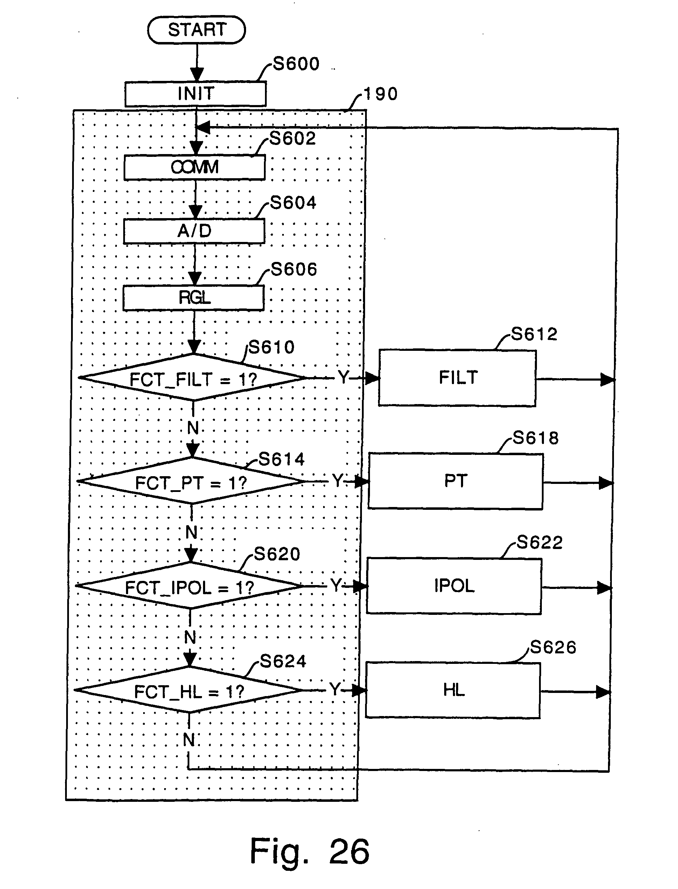

**Fig. 26** zeigt ein Flußdiagramm mit einer möglichen Ausführungsform des in dem μC 11 ablaufenden Gesamtprogramms. Nach dem Einschalten des Lüfters wird in dem μC 11 ein interner Reset ausgelöst. In S600 erfolgt die Initialiserung des μC 11. Es werden z.B. Parameter aus dem EEPROM 26 ausgelesen, der Kondensator 124 (Fig. 19) der PWM-Regelung wird auf einen Mindestwert aufgeladen und der Watchdog-Timer WDCNT 79 wird für die A/D-Wandlung gestartet.

Nach der Initialisierung erfolgt ein Sprung in einen sogenannten Funktionsmanager 190, der in S602 beginnt. Der Funktionsmanager regelt den Ablauf der einzelnen Unterprogramme.

Als erstes werden die Funktionen abgearbeitet, die zeitkritisch sind und bei jedem Durchlauf abgearbeitet werden müssen. Hierzu zählt die Kommunikationsfunktion COMM in S602, da der IIC-Bus 30 (Fig. 18) z.B. bei einer Baudrate von 2 k alle 250 μs überprüft werden muß. In S604 wird die A/D-Wandlung (S502, Fig. 25) aufgerufen und in S606 die Regelung RGL der Motordrehzahl (S518 und S520 in Fig. 25).

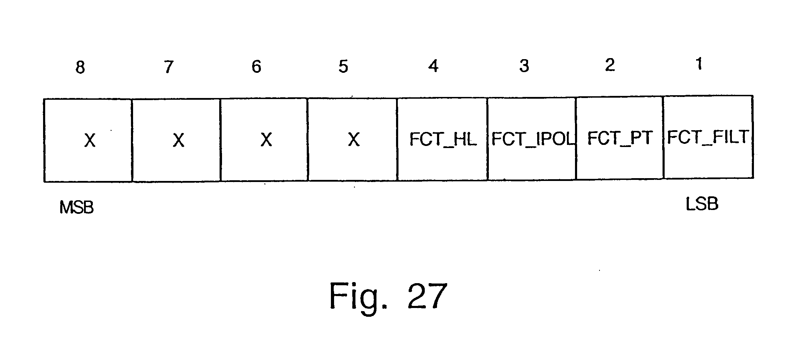

**Fig. 27** zeigt ein beispielhaftes Funktionsregister 195, in dem für jede weitere Funktion ein Bit reserviert ist.

In diesem Beispiel ist das Funktionregister 195 1 Byte groß, und es sind, von dem niederwertigsten Bit (LSB) beginnend, die folgenden Anforderungsbits für die unten erklärten anforderbaren Funktionen definiert:

- FCT_FILT für die Hysterese- und Sensorabrißfunktion,
- FCT_PT für die Kennlinienpunktbestimmungsfunktion,
- FCT_IPOL für die Drehzahlinterpolationsfunktion,
- FCT_HL für die Hall-Längenberechnungsfunktion für die Berechnung von HL_s.

Die restlichen Bits sind für weitere anforderbare Funktionen reserviert, die an den Funktionsmanager 190 angehängt werden können. Das Funktionsregister 195 belegt in diesem Ausführungsbeispiel 1 Byte, es kann aber um weitere Bytes erweitert werden.

Soll eine bestimmte anforderbare Funktion durch eine andere Funktion oder eine Interruptroutine angefordert werden, so wird das Bit der angeforderten Funktion auf 1 gesetzt. Das nächste Mal, wenn der Funktionsmanager 190 bei einem Durchlauf keine andere anforderbare Funktion mit höherer Priorität aufgerufen hat, so wird diese Funktion ausgeführt.

Ist eine angeforderte Funktion mit ihrer Abarbeitung fertig, so setzt sie ihr Bit (Fig. 27) wieder auf 0. Dies ermöglicht es, Funktionen, die nicht in einem Durchlauf abgearbeitet werden können, weil sie z.B. zu lange Zeit benötigen, aufzuteilen und in mehreren Aufrufen abzuarbeiten.

In Fig. 26 wird nach S606 in einer vorbestimmten Reihenfolge von der wichtigsten anforderbaren Funktion ausgehend jeweils geprüft, ob deren Anforderungsbit gesetzt ist. Ist dies bei einer Funktion der Fall, so wird diese ausgeführt, und daraufhin wird wieder an den Anfang S602 des Funktionsmanagers 190 gesprungen. Die Reihenfolge der Überprüfung des Funktionsregisters 195 gibt die Priorisierung der anforderbaren Funktionen vor. Je höher eine solche Funktion in dem Funktionsmanager 190 steht, desto höher ist ihre Priorität.

Die aufgerufenen Funktionen müssen dabei so kurz sein, daß ihre Abarbeitungszeit, addiert zu den immer ausgeführten Funktionen S602 bis S606, nie größer als die maximal zulässige Zeit zwischen zwei Abfragen des IIC-Buses ist. In dem obigen Beispiel mit einer Baudrate von 2 k und einer maximal zulässigen Zeit von 250 μs liegt die maximale Abarbeitungszeit für die in S610 bis S624 aufgerufenen Funktionen bei ca. 100 μs. Die in Fig. 25 aufgeführten Funktionen müssen also meistens in zeitlich kürzere Abschnitte untergliedert werden.

Die Untergliederung der Funktionen gemäß Fig. 26 stellt nur ein bevorzugtes Beispiel dar.

In S610 wird überprüft, ob das Anforderungsbit FCT_FILT für eine Filterfunktion gesetzt ist, also den Wert 1 hat. Ist es gesetzt, so wird nach FILT S612 gesprungen, und die Hysteresefunktion (S504, Fig. 25) und die Sensorabrißfunktion (S506 und S508, Fig. 25) werden in FILT ausgeführt. Diese werden als Filterfunktion bezeichnet, weil sie durch die Hysteresefunktion kleine Schwankungen des Wertes NTC_VAL in negative Richtung herausfiltern, und weil sie durch die Sensorabrißfunktion unmögliche Werte NTC_VAL herausfiltern. Weiterhin sind Mittelwertbildungen (moving average) über vorhergehende Werte von NTC_VAL möglich.

War in S610 FCT_FILT nicht gesetzt, so wird in PT S614 überprüft, ob FCT_PT gesetzt ist. Ist dies der Fall, so werden je nach Berechnungsvariante einer oder beide den gemessenen Wert NTC_VAL umgebenden Kennliniendefinitionspunkte in PT S614 bestimmt und geladen (Teil von S510, Fig. 25).

Waren in S610 und S614 weder FCT_FILT noch FCT_PT gesetzt, und ist in S620 FCT_IPOL gesetzt, so wird in IPOL S622 die Berechnung des zum Wert NTC_VAL zugehörigen Solldrehzahlwerts n_s ausgeführt (Teil von S510, Fig. 25).

Waren keine der in S610 bis S620 überprüften Bits gesetzt, und ist in S624 FCT_HL gesetzt, so wird aus der Solldrehzahl n_s in HL S626 die "Hallänge" HL_s berechnet (S512, Fig. 25). Daraufhin wird wieder nach S602 gesprungen.

War in keiner der Abfragen bis S624 ein Anforderungsbit gesetzt, so wird ohne eine Aktion nach S602 zurückgesprungen, und die Funktionen, die bei jedem Durchlauf des Funktionsmanagers 190 ausgeführt werden, werden erneut aufgerufen.

Durch den Funktionsmanager erhält man eine optimale Ausnutzung der Ressourcen des μC 11.

Im folgenden wird ein Überblick über das Zusammenarbeiten der verschiedenen Funktionen gegeben.

Die Kommunikationsfunktion in S602 wird in diesem Ausführungsbeispiel (Fig. 26) als erstes ausgeführt. Der externe IIC-Bus 30 (Fig. 18) wird abgelesen bzw. beschrieben, oder es werden Daten in das EEPROM geschrieben, bzw. aus diesem ausgelesen.

Die A/D-Wandlung in S604 wird ebenfalls bei jedem Durchlauf des Funktionsmanager aufgerufen.

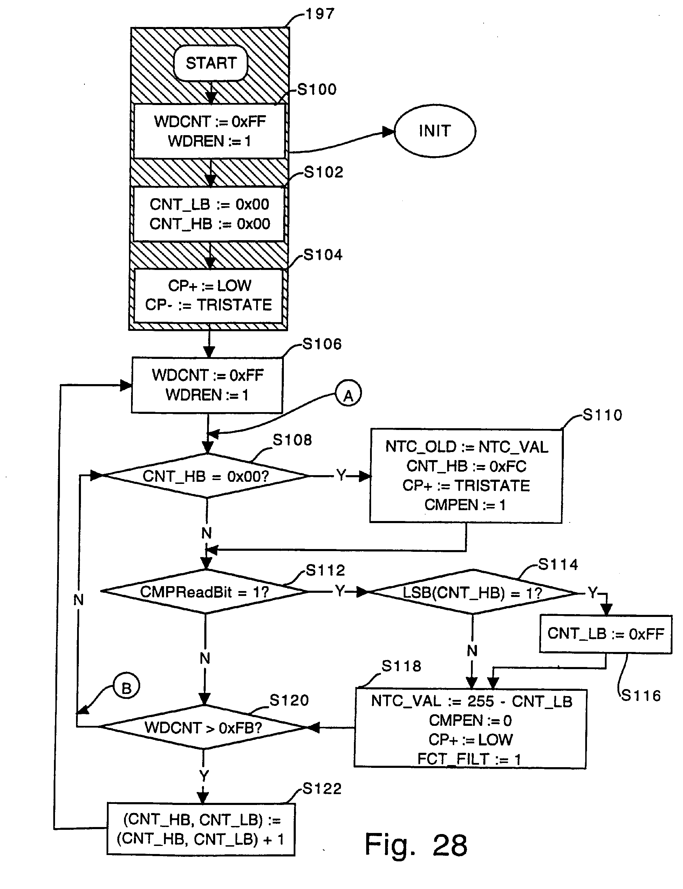

**Fig. 28** zeigt die für den Funktionsmanager gemäß Fig. 26 modifizierte A/D-Wandlung aus Fig. 5. Der Initialisierungsteil 197 in S100 - S104 wird im Initialisierungsteil INIT in S600 des Hauptprogramms ausgeführt. Der Sprung in die A/D-Wandlung erfolgt an Punkt A zwischen S106 und S108. Die A/D-Wandlung wird an Punkt B wieder verlassen, wenn also der Vergleich WDCNT > 0xFB das Ergebnis Nein (N) hat. Der Schritt S106 wird dabei nicht vergessen. Ist in S120 nicht mehr WDCNT > 0xFB, so wird wie in Fig. 5 in S122 der aus (CNT_HB 81, CNT_LB 82) gebildete Zähler CNT80 inkrementiert, und daraufhin wird in S106 der Watchdog-Timer WDCNT wieder auf 0xFF gesetzt und der Watchdog-Timer von neuem gestartet.

Nach jeder abgeschlossenen A/D-Wandlung, wenn also in S118 ein neuer Wert NTC_VAL vorliegt, wird in S118 das Anforderungsbit FCT_FILT auf 1 gesetzt, damit bei der nächsten Möglichkeit in S612 (Fig. 26) die Filterfunktion ausgeführt wird.

In S606 (Fig. 26) wird die Regelung RGL (S518 und S520, Fig. 25) aufgerufen.

**Fig. 29** zeigt eine beispielhafte Ausführung einer für den Funktionsmanager 190 angepaßte Regelung RGL. Es wird dabei von Fig. 20 ausgegangen. Gleiche oder gleich wirkende Teile wie in Fig. 20 werden deshalb mit denselben Bezugszeichen bezeichnet wie dort und gewöhnlich nicht nochmals beschrieben.

Die Berechnung von CNT_R und VZ_R in S404 benötigt so viel Zeit, daß die Regelung direkt nach der Berechnung verlassen wird. Dies wird durch das Einführen eines Flags FLAG_R erreicht. Ist in S400 nicht FLAG_R = 1, so liegt ein Neuaufruf der Regelung vor. In S402 wird mit FLAG_R := 1 das FLAG_R auf 1 gesetzt und so signalisiert, daß die Regelung aktiv ist. Daraufhin wird wie in Fig. 20 die Regelberechnung in S404 durchgeführt und aus der Regelung gesprungen.

Beim nächsten Aufruf der Regelung ist FLAG_R = 1, die Regelung ist also aktiv, und nun muß wie in den Schritten S418 bis S428 der Fig. 20 der Kondensator 124 aufgeladen bzw. entladen werden

Das Aufladen bzw. Entladen des Kondensators 124 muß in kleinere Blöcke unterteilt werden, da das Laden bzw. Entladen des Kondensators 124 (Fig. 19) der PWM-Regelung oft länger als 100 µs benötigt

Hierzu wird gemäß Fig. 29 die Regelung so verändert, daß der Kondensator 124 bei jedem Aufruf der Regelung (S606 in Fig. 26) häppchenweise auf- bzw. entladen wird, so daß kein Aufruf der Regelung länger als die durch den IIC-Bus maximal zulässige Zeit von z.B. 100 µs benötigt.

Hierzu werden vor der Entscheidung in S418 (Fig. 29) zwei weitere Variablen TMP_R und N und die Schritte S410 bis S416 eingeführt. In S410 wird der Variablen TMP_R der Wert (CNT_R - 8) zugeordnet, also der Stellgrößenwert CNT_R, vermindert um die Zahl 8. Ist TMP_R > 0, so wird in S412 nach S416 gesprungen, ansonsten nach S414. In S416, wenn also CNT_R größer als 8 ist, wird einer Zählervariablen N der Wert 8 zugeordnet, und CNT_R wird der Wert TMP_R zugeordnet, so daß die neue Stellgröße CNT_R beim nächsten Aufruf der Regelung bekannt ist. In S414, wenn also CNT_R kleiner oder gleich 8 war, wird der Zählervariablen N der Wert CNT_R zugeordnet, und FLAG_R wird auf 0 gesetzt, da CNT_R bei diesem Aufruf der Regelung vollständig abgearbeitet wird.

In den Schritten S418 bis S428 wird wie in Fig. 20 abhängig vom Vorzeichen VZ_R der Kondensator 124 während des Durchlaufens einer Schleife aufgeladen bzw. entladen. Die Schleife wird jedoch im Gegensatz zu Fig. 20 nicht CNT_R mal durchlaufen, sondern N mal, also maximal 8 mal. Hierfür wurde in S424' und S426' CNT_R durch N ersetzt.

Es wird nun der Überblick über das Zusammenarbeiten der verschiedenen Funktionen aus Fig. 26 fortgesetzt.

Durch das Setzen von FCT_FILT durch die A/D-Wandlung in S604 (Fig. 26), wenn ein neuer NTC_VAL vorliegt, wird bei der nächsten Gelegenheit von S610 (Fig. 26) aus die Hysterese- (Fig. 9) und die Sensorabrißfunktion (Fig. 10) aufgerufen werden.

Sind in S612 die Hysterese- und die Sensorabrißfunktion ausgeführt, so wird FCT_FILT wieder auf 0 gesetzt, und in S612 wird FCT_PT auf 1 gesetzt, so daß bei dem nächsten Sprung nach S614 die Kennlinienbestimmungsfunktion S618 aufgerufen wird.

Ist in S618 die Kennlinienpunktbestimmungsfunktion fertig, so setzt sie FCT_PT auf 0, und FCT_IPOL auf 1. Bei dem nächsten Sprung nach S620 wird dann schließlich S622 aufgerufen. Ist die Drehzahlinterpolationsfunktion in S622 fertig, so setzt sie FCT_IPOL auf 0 und FCT_HL auf 1.

So wird dann in S624, da FCT_HL = 1 ist, die Hall-Längenberechnung S626 aufgerufen, und bei deren Beendigung wird FCT_HL wieder auf 0 gesetzt. In S626 wird ein Sollwert HL_s für die "Hallänge" berechnet.

Der Funktionsmanager erlaubt es, gegebenenfalls weitere Unterprogramme einzufügen und dabei die durch den IIC-Bus 30 gegebene Zeitbegrenzung einfach zu erfüllen. Weiterhin wird es den Unterprogrammen und den Interruptroutinen ermöglicht, andere Unterprogramme in einfacher Weise aufzurufen.

Der Aufbau des Hauptprogramms in der Form eines Funktionsmanagers eignet sich für alle Geräte, die einen Mikrocontroller oder Mikroprozessor aufweisen, der sowohl einen Bus als auch andere Aufgaben steuert, z.B. die Steuerung eines Kfz-Motors.

Es folgt eine Tabelle mit typischen Beispielen für die Werte der verwendeten Bauteile:

Kondensatoren:

135                          1,5 nF

(fortgesetzt)

| Kondensatoren: | |
| --- | --- |
| 127, 152 | 10 nF |
| 14, 90 | 22 nF |
| 99, 110, 166, 167 | 33 nF |
| 154 | 100 nF |
| Tantalkondensator: | |
| 124 | 3,3 $\mu$F |
| Widerstände: | |
| 140 | 3$\Omega$ |
| 162,163 | 47 $\Omega$ |
| 94, 153, 155 | 1 k$\Omega$ |
| 133, 136 | 2,2 k$\Omega$ |
| 106 | 3,3 k$\Omega$ |
| 164,165 | 4,7 k$\Omega$ |
| 123, 131, 132 | 10 k$\Omega$ |
| 170 | 22 k$\Omega$ |
| 92, 114, 126 | 33 k$\Omega$ |
| 134 | 47 k$\Omega$ |
| 16, 91, 93, 96, 101, 112, 128, 169 | 100 k$\Omega$ |
| NTC-Widerstand: | |
| 18 | NTC 100 k$\Omega$ |
| npn-Transistor: | |
| 150 | BC846 |
| pnp-Transistoren: | |
| 95, 168 | BC856B |
| Komparatoren: | |
| 108, 120, 130 | LM2901D |
| Hall-Sensor: | |
| 40 | HW101A |
| EEPROM: | |
| 26 | 2-Wire Serial CMOS EEPROM AT24C01A (ATMEL) |
| Mikrocontroller: | |
| 11 | COP 842 CJ (Nat. Semicond.) |

**Patentansprüche**

1. Elektromotor (9) mit einer von einer variablen physikalischen Größe (2), insbesondere einer Temperatur, gesteuerten Drehzahl,
ferner mit einem Mikrocontroller (11) oder Mikroprozessor und einem diesem zugeordneten nichtflüchtigen Speicher, **dadurch gekennzeichnet, dass** in dem nichtflüchtigen Speicher ein Kennlinienfeld in Form von digitalen Einzelwerten gespeichert ist, in welchem Werte der physikalischen Größe entsprechenden Drehzahlwerten des Elektromotors zugeordnet sind, wobei der Mikrocontroller (11) oder Mikroprozessor Zugriff zu den gespeicherten digitalen Einzelwerten hat und ihm ein Programm zur Interpolation zwischen im Kennlinienfeld gespeicherten Einzelwerten zugeordnet ist, um die Drehzahl im Bereich zwischen gespeicherten Werten durch Interpolation zu bestimmen und zu steuern.

2. Elektromotor (9) nach Anspruch 1, bei welchem die digitalen Einzelwerte mindestens teilweise in Vektorform gespeichert sind.

3. Elektromotor nach Anspruch 1 oder 2, bei welchem die variable physikalische Größe eine von einem temperaturabhängigen Widerstand (18) erfasste Temperatur ist.

4. Elektromotor (9) nach einem oder mehreren der vorhergehenden Ansprüche, mit einem A/D-Wandler (10) zum Umsetzen einer analogen physikalischen Größe (2) in einen Digitalwert.

5. Elektromotor (9) nach Anspruch 4, mit einer Anordnung zur Prüfung, ob bei der A/D-Wandlung ein Überlauf auftritt.

6. Elektromotor (9) nach Anspruch 5, bei welchem beim Auftreten eines Überlaufs der bei der A/D-Wandlung entstandene Digitalwert durch einen vorgegebenen Digitalwert ersetzt wird.

7. Elektromotor nach einem oder mehreren der vorhergehenden Ansprüche, bei welchem dem A/D-Wandler eine Hysteresefunktion (S504) nachgeschaltet ist, welche bei kleinen Änderungen der physikalischen Größe den bei einer vorhergehenden A/D-Wandlung ermittelten Digitalwert beibehält, um Drehzahlschwankungen des Motors zu reduzieren.

8. Elektromotor (9) nach Anspruch 7, bei welchem die Hysteresefunktion nur bei Änderungen der physikalischen Größe in einer Richtung wirksam ist, nicht aber bei Änderungen in der entgegengesetzten Richtung.

9. Elektromotor (9) nach einem oder mehreren der vorhergehenden Ansprüche, bei welchem dem A/D-Wandler (10) eine Plausibilitätsfunktion (S506) nachgeschaltet ist, welche den bei einer A/D-Wandlung ermittelten Digitalwert auf Plausibilität überprüft und einen nicht plausiblen Digitalwert durch einen vorgegebenen Digitalwert ersetzt.

10. Elektromotor (9) nach einem oder mehreren der Ansprüche 4 bis 9, bei welchem dem Elektromotor ein Drehzahlregler (6) zugeordnet ist, und das bei der A/D-Wandlung erzeugte Signal zur Erzeugung eines Sollwertsignals für diesen Drehzahlregler dient.

11. Elektromotor (9) nach Anspruch 10, bei welchem als Istwertsignal ein digitales Signal verwendet wird, welches im wesentlichen der Zeit proportional ist, die der Rotor des Elektromotors zum Durchlaufen eines vorgegebenen Drehwinkels benötigt.

12. Elektromotor (9) nach den Ansprüchen 10 und 11, bei welchem der bei der A/D-Wandlung ermittelte digitale Wert in einen Wert für die Zeit umgeformt wird (S512), die der Rotor (39) für das Durchlaufen des vorgegebenen Drehwinkels benötigen soll.

13. Elektromotor (9) nach Anspruch 12, bei welchem eine Differenz aus digitalem Sollwertsignal und digitalem Istwertsignal, oder umgekehrt, gebildet wird, um ein digitales Abweichungssignal (CNT_R) für das Maß der Regelabweichung und ein digitales Vorzeichensignal (VZ_R) für das Vorzeichen dieser Regelabweichung zu erhalten.

14. Elektromotor (9) nach Anspruch 13, bei welchem ein PWM-Steller für die Steuerung des Motorstroms vorgesehen ist, dessen Tastverhältnis von der Spannung an einem Kondensator (124) steuerbar ist,
und dieser Kondensator während einer Zeitdauer geladen oder entladen wird, die der absoluten Größe des digitalen Abweichungssignals im wesentlichen proportional ist, wobei durch das Vorzeichensignal gesteuert wird, ob der Kondensator geladen oder entladen wird.

15. Elektromotor (9) nach einem oder mehreren der vorhergehenden Ansprüche, bei welchem ein nichtflüchtiger Speicher (26) für die Speicherung der digitalen Werte des Kennlinienfelds vorgesehen ist.

16. Elektromotor (9) nach Anspruch 15, bei welchem mindestens ein Teil der im nichtflüchtigen Speicher (26) gespeicherten digitalen Einzelwerte veränderbar ist.

17. Elektromotor (9) nach Anspruch 16, welcher einen Anschluss (30) aufweist, der mit einem Eingabegerät für die Eingabe eines Werts in den nichtflüchtigen Speicher (26) verbindbar ist.

18. Elektromotor (9) nach Anspruch 16 oder 17, bei welchem eine Verbindung zu einem Datenbus vorgesehen ist, über den Daten in den nichtflüchtigen Speicher transferierbar sind.

19. Elektromotor (9) nach Anspruch 17 oder 18, bei welchem die Datenübertragung vom und/oder zum nichtflüchtigen Speicher (26) durch den Mikroprozessor oder Mikrocontroller (11) des Elektromotors steuerbar ist.

20. Elektromotor (9) nach Anspruch 19, bei welchem der Mikrocontroller (11) oder Mikroprozessor des Motors für die Datenverbindung mit einem äußeren Eingabegerät als sogenannter Slave dieser Datenverbindung ausgebildet ist.

21. Elektromotor (9) nach einem der vorhergehenden Ansprüche, bei dem die Betriebszeit gezählt wird.

22. Elektomotor (9) nach Anspruch 22, bei welchem die Betriebszeit von außen abgefragt werden kann.

23. Elektromotor (9) nach Anspruch 1 oder 2, bei welchem die digitalen Einzelwerte mindestens teilweise als Punkt mit zugehöriger Steigung gespeichert sind.

24. Verfahren zum Steuern der Drehzahl eines Elektromotors (9) abhängig von einer physikalischen Größe, welchem Elektromotor ein Mikrocontroller (11) oder Mikroprozessor sowie ein Speicher (26) zum Speichern von Daten zugeordnet sind, zu welchen Daten der Mikroprozessor oder Mikrocontroller (11) Zugriff hat, mit folgenden Schritten:

In dem Speicher (4; 26) wird in Form von digitalen Einzelwerten ein Kennlinienfeld zum Zuordnen von Werten der physikalischen Größe zu entsprechenden Drehzahlwerten des Motors gespeichert; zwischen im Kennlinienfeld gespeicherten Einzelwerten wird interpoliert, um die Drehzahl im Bereich zwischen gespeicherten Einzelwerten durch Interpolation zu bestimmen und zu steuern.

25. Verfahren nach Anspruch 24, bei Weichem die digitalen Einzelwerte mindestens teilweise in Vektorform gespeichert werden.

26. Verfahren nach Anspruch 24 oder 25, bei welchem als variable physikalische Größe eine Temperatur erfasst wird.

27. Verfahren nach einem oder mehreren der Ansprüche 24 bis 26, für einen Elektromotor, dem ein A/D-Wandler (10) zugeordnet ist, wobei eine analoge physikalische Größe (2) in einen Digitalwert umgewandelt wird.

28. Verfahren nach Anspruch 27, bei welchem geprüft wird, ob bei der A/D-Wandlung ein Überlauf auftritt.

29. Verfahren nach Anspruch 28, bei welchem beim Auftreten eines Überlaufs der bei der A/D-Wandlung entstandene Digitalwert durch einen vorgegebenen Digitalwert ersetzt wird.

30. Verfahren nach einem oder mehreren der Ansprüche 27 bis 29, bei welchem mittels einer Hysteresefunktion (S504) bei kleinen Änderungen der physikalischen Größe ein bei einer vorhergehenden A/D-Wandlung ermittelter Digitalwert beibehalten wird, um Drehzahländerungen des Motors zu reduzieren.

31. Verfahren nach Anspruch 30, bei welchem die Hysteresefunktion nur bei Änderungen der physikalischen Größe in einer vorgegebenen Richtung verwendet wird, nicht aber bei Änderungen in der entgegengesetzten Richtung.

32. Verfahren nach einem oder mehreren der Ansprüche 27 bis 31, bei welchem die Ausgangswerte des A/D-Wandlers (10) einer Plausibilitätsprüfung (S506) unterzogen werden, welche einen nicht plausiblen Digitalwert durch einen vorgegebenen Digitalwert ersetzt.

33. Verfahren nach einem oder mehreren der Ansprüche 27 bis 32 für einen Elektromotor, welchem ein Drehzahlregler (6) zugeordnet ist, bei welchem aus dem bei der A/D-Wandlung erzeugten Signal ein Sollwertsignal für den Drehzahlregler erzeugt wird.

34. Verfahren nach Anspruch 33, bei welchem als Istwertsignal ein digitales Signal verwendet wird, welches im wesentlichen der Zeit proportional ist, die der Rotor des Elektromotors zum Durchlaufen eines vorgegebenen Drehwinkels benötigt.

35. Verfahren nach den Ansprüchen 33 und 34, bei welchem der bei der A/D-Wandlung ermittelte digitale Wert in einen Wert für eine Zeitspanne umgeformt wird (S512), welche der Rotor (3)) für das Durchlaufen des vorgegebenen Drehwinkels benötigen soll.

36. Verfahren nach Anspruch 35, bei welchem eine Differenz aus digitalem Sollwertsignal und digitalem Istwertsignal, oder umgekehrt, gebildet wird, um ein digitales Abweichungssignal (CNT_R) für das Maß der Regelabweichung und ein digitales Vorzeichensignal (VZ_R) für das Vorzeichen dieser Regelabweichung zu erhalten.

37. Verfahren nach Anspruch 36 für einen Elektromotor, welchem ein PWM-Steller für die Steuerung des Motorstroms zugeordnet ist, wobei das Tastverhältnis dieses Stellers von der Spannung an einem Kondensator (124) steuerbar ist, mit folgenden Schritten:

Der Kondensator (124) wird während einer Zeitdauer geladen oder entladen, welche der absoluten Größe des digitalen Abweichungssignals (CNT_R) im wesentlichen proportional ist;
durch das Vorzeichensignal (VZ_R) wird gesteuert, ob der Kondensator während dieser Zeitdauer geladen oder entladen wird.

38. Verfahren nach einem oder mehreren der Ansprüche 24 bis 37, bei welchem die digitalen Werte des Kennlinienfelds in einem nichtflüchtigen Speicher (26) gespeichert werden.

39. Verfahren nach Anspruch 38, bei welchem mindestens ein Teil der im nichtflüchtigen Speicher (26) gespeicherten digitalen Einzelwerte veränderbar ist.

40. Verfahren nach Anspruch 39 für einen Elektromotor, welcher einen Anschluss (30) aufweist, der mit einem Eingabegerät für die Eingabe eines Wertes in den nichtflüchtigen Speicher (26) verbindbar ist,
und Werte im nichtflüchtigen Speicher (26) über diesen Anschluss (30) verändert werden.

41. Verfahren nach Anspruch 39 oder 40, bei welchem Daten über einen Datenbus (Fig. 18: 30) in den nichtflüchtigen Speicher (26) transferiert werden.

42. Verfahren nach Anspruch 40 oder 41, bei welchem die Datenübertragung von und/oder zum nichtflüchtigen Speicher (26) durch den Mikroprozessor oder Mikrocontroller (11) des Elektromotors gesteuert wird.

43. Verfahren nach Anspruch 42, bei welchem der Mikrocontroller (11) oder Mikroprozessor des Motors (9) für die Datenverbindung mit einem äußeren Eingabegerät als sogenannter Slave dieser Datenverbindung betrieben wird.

44. Verfahren nach einem der Ansprüche 24 bis 43, bei welchem die Betriebszeit gezählt wird.

45. Verfahren nach Anspruch 44, bei welchem die Betriebszeit von außen abgefragt wird.

46. Verfahren nach Anspruch 24 oder 25, bei welchem die digitalen Einzelwerte mindestens teilweise in Form eines Punktes mit zugehöriger Steigung gespeichert sind.

47. Verfahren nach einem der Ansprüche 24 bis 46, bei welchem in dem Speicher (4; 26) individuelle Werte von Kennlinien-Definitionspunkten gespeichert werden, welche mindestens einen für eine bestimmte Temperatur kennzechnenden Wert und eine dieser Temperatur zugeordnete Drehzahlinformation enthalten. -

48. Verfahren nach Anspruch 47, bei welchem in zeitlichen Abständen ein aktueller Wert für die Temperatur erfasst wird, welche die Motordrehzahl steuert,
und dieser erfasste Wert mit den gespeicherten, für die Temperatur kennzeichnenden Werten der Kennlinien-Definitionspunkte verglichen wird.

49. Verfahren nach Anspruch 48, bei welchem ein zu dem aktuellen Wert für die Temperatur benachbarter gespeicherter Wert ermittelt wird,
bei dem ferner durch eine von diesem benachbarten Wert ausgehende Interpolation eine Drehzahlinformation zu dem erfassten aktuellen Wert ermittelt wird,
und bei dem ein von dieser interpolierten Drehzahlinformation abgeleiteter Wert (H_L) zur Vorgabe einer Solldrehzahl für die Drehzahlregelung verwendet wird.

50. Verfahren nach Anspruch 49, bei welchem die interpolierte Drehzahlinformation durch lineare Interpolation ermittelt wird.

51. Verfahren nach einem der Ansprüche 24 bis 50, bei welchem für mindestens einen einen Kennlinien-Definitionspunkt zusätzlich zu dem für eine bestimmte Temperatur kennzeichnenden Wert und einer diesem Wert zugeordneten Drehzahlinformation eine Steigung für die lineare Interpolation abgespeichert wird.

**52.** Verfahren nach einem oder mehreren der Ansprüche 38 bis 51, bei welchem der erfasste, für die Temperatur kennzeichnende Wert mit einem bei einer vorhergehenden Erfassung erfassten, für die Temperatur kennzeichnenden Wert verglichen wird,
und eine Änderung des zur Vorgabe der Soll-Drehzahl dienenden Werts nur vorgenommen wird, wenn entweder die Temperatur zugenommen hat, oder wenn sie um einen vorgegebenen Mindestwert abgenommen hat.

**53.** Verfahren nach Anspruch 52, bei welchem der vorgegebene Mindestwert als Variable gespeichert wird.

**54.** Verfahren nach Anspruch 53, bei welchem der vorgegebene Mindestwert über einen Bus im nichtflüchtigen Speicher verändert wird.

**55.** Verfahren nach einem oder mehreren der Ansprüche 24 bis 54, bei welchem der erfasste, für die Temperatur kennzeichnende Wert auf Plausibilität geprüft wird,
und ein vorgegebener Drehzahl-Sollwert erzeugt wird, wenn dieser erfasste Wert einer in der Praxis nicht vorkommenden Temperatur, insbesondere einer zu tiefen Temperatur, entspricht.

**56.** Verfahren nach Anspruch 55, bei welchem für die nicht vorkommende Temperatur eine Mindesttemperatur angenommen wird,
und allen Temperaturen, die kleiner oder gleich dieser Temperatur sind, eine vorgegebene Drehzahlinformation zugeordnet wird.

**57.** Verfahren nach Anspruch 56, bei welchem die vorgegebene Mindesttemperatur und die zugeordnete vorgegebene Drehzahlinformation in einem nichtflüchtigen Speicher gespeichert werden und veränderbar sind.

**58.** Verfahren nach Anspruch 57, bei welchem der Elektromotor auf seine maximale Drehzahl eingestellt wird, wenn der erfasste, für die Temperatur kennzeichnende Wert einer in der Praxis nicht vorkommenden Temperatur entspricht.

**59.** Verfahren nach einem oder mehreren der Ansprüche 24 bis 58, bei welchem zur Regelung der Motordrehzahl eine Pulsweitenmodulation mit einem an einem Eingang eines Komparators anliegenden Dreiecksignal und einer an einem anderen Eingang dieses Komparators durch einen Kondensator vorgegebenen Spannung, welche durch einen Mikrocontroller veränderbar ist, verwendet wird.

**60.** Verfahren nach Anspruch 59, bei welchem eine Änderung der Ladung des Kondensators mindestens einmal durch einen anderen Prozess unterbrochen wird.

**Claims**

**1.** Electric motor (9) with a rotational speed which is controlled by a variable physical quantity (2), in particular a temperature,
further with a microcontroller (11) or microprocessor and a non-volatile memory which is associated with the latter, **characterised in that** a family of characteristics in the form of individual digital values in which values of the physical quantity are associated with corresponding rotational speed values of the electric motor, is stored in the non-volatile memory, and the microcontroller (11) or microprocessor has access to the stored individual digital values and has an associated programme for interpolation between individual values stored in the family of characteristics in order to determine and to control the rotational speed in the area between stored values by interpolation.

**2.** Electric motor (9) according to claim 1, in which the individual digital values are at least partly stored in vector form.

**3.** Electric motor according to claim 1 or 2, in which the variable physical quantity is a temperature detected by a temperature-dependent resistor (18).

**4.** Electric motor (9) according to one or more of the preceding claims, with an A/D converter (10) for converting an analogue physical quantity (2) into a digital value.

**5.** Electric motor (9) according to claim 4, with an arrangement for checking whether an overrun occurs during the A/D conversion.

6. Electric motor (9) according to claim 5, in which when an overrun occurs, the digital value produced during the A/D conversion is replaced by a predetermined digital value.

7. Electric motor according to one or more of the preceding claims, in which the A/D converter is followed by a hysteresis function (S504) which when small changes occur in the physical quantity, retains the digital value determined during a preceding A/D conversion in order to reduce fluctuations in the rotational speed of the motor.

8. Electric motor (9) according to claim 7, in which the hysteresis function is only effective in the event of changes in the physical quantity in one direction, but not in the event of changes in the opposite direction.

9. Electric motor (9) according to one or more of the preceding claims, in which the A/D converter (10) is followed by a plausibility function (S506) which checks the digital value determined during an A/D conversion for plausibility and replaces an implausible digital value by a predetermined digital value.

10. Electric motor (9) according to one or more of claims 4 to 9, in which the electric motor has an associated rotational speed controller. (6) and the signal produced during the A/D conversion is used to produce a set value signal for this rotational speed controller.

11. Electric motor (9) according to claim 10, in which a digital signal is used as actual value signal which is essentially proportional to the time which the rotor of the electric motor requires to run through a predetermined angle of rotation.

12. Electric motor (9) according to claims 10 and 11, in which the digital value determined during the A/D conversion is converted into a value for the time (S512) which the rotor (39) should require to run through the predetermined angle of rotation.

13. Electric motor (9) according to claim 12, in which a difference is formed from the digital set value signal and the digital actual value signal, or vice versa, in order to obtain a digital deviation signal (CNT_R) for the amount of the control deviation and a digital sign signal (VZ_R) for the sign of this control deviation.

14. Electric motor (9) according to claim 13, in which a PWM controller is provided for controlling the motor current, the pulse duty cycle of which is controllable by the voltage at a capacitor (124), and this capacitor is charged or discharged for a period of time which is essentially proportional to the absolute quantity of the digital deviation signal, the sign signal being used to control whether the capacitor is charged or discharged.

15. Electric motor (9) according to one or more of the preceding claims, in which a non-volatile memory (26) is provided for storage of the digital values of the family of characteristics.

16. Electric motor (9) according to claim 15, in which at least a part of the individual digital values stored in the non-volatile memory (26) can be changed.

17. Electric motor (9) according to claim 16, which comprises a connection (30) which can be connected to an input device for inputting a value into the non-volatile memory (26).

18. Electric motor (9) according to claim 16 or 17, in which a connection is provided to a data bus over which data can be transferred into the non-volatile memory.

19. Electric motor (9) according to claim 17 or 18, in which the data transfer from and/or to the non-volatile memory (26) can be controlled by the microprocessor or microcontroller (11) of the electric motor.

20. Electric motor (9) according to claim 19, in which for the data connection to an external input device the microcontroller (11) or microprocessor of the motor is embodied as a so-called slave of this data connection.

21. Electric motor (9) according to one of the preceding claims, in which the operating time is counted.

22. Electric motor (9) according to claim 22 *[sic]*, in which the operating time can be checked from the exterior.

23. Electric motor (9) according to claim 1 or 2, in which the individual digital values are stored at least in part in the form of a point with an associated gradient.

24. Method for controlling the rotational speed of an electric motor (9) depending on a physical quantity, which electric motor has an associated microcontroller (11) or microprocessor and a memory (26) for storage of data, to which data the microprocessor or microcontroller (11) has access, with the following steps:

a family of characteristics in the form of individual digital values is stored in the memory (4; 26) in order to associate values of the physical quantity with corresponding rotational speed values of the motor; interpolation is carried out between individual values stored in the family of characteristics in order to determine and to control the rotational speed in the area between stored individual values by interpolation.

25. Method according to claim 24, in which the individual digital values are at least partly stored in vector form.

26. Method according to claim 24 or 25, in which a temperature is detected as the variable physical quantity.

27. Method according to one or more of claims 24 to 26, for an electric motor which has an associated A/D converter (10), in which an analogue physical quantity (2) is converted into a digital value.

28. Method according to claim 27, in which a check is carried out to see whether an overrun occurs during the A/D conversion.

29. Method according to claim 28, in which when an overrun occurs the digital value produced during the A/D conversion is replaced by a predetermined digital value.

30. Method according to one or more of claims 27 to 29, in which when small changes occur in the physical quantity a hysteresis function (S504) is used to retain a digital value determined during a preceding A/D conversion in order to reduce changes in the rotational speed of the motor.

31. Method according to claim 30, in which the hysteresis function is only used in the event of changes in the physical quantity in a predetermined direction, but not in the event of changes in the opposite direction.

32. Method according to one or more of claims 27 to 31, in which the output values of the A/D converter (10) are subjected to a plausibility check (S506) which replaces an implausible digital value by a predetermined digital value.

33. Method according to one or more of claims 27 to 32 for an electric motor which has an associated rotational speed controller (6), in which a set value signal for the rotational speed controller is produced from the signal produced during the A/D conversion.

34. Method according to claim 33, in which a digital signal is used as the actual value signal which is essentially proportional to the time which the rotor of the electric motor requires to run through a predetermined angle of rotation.

35. Method according to claims 33 and 34, in which the digital value determined during the A/D conversion is converted into a value for a length of time (S512) which the rotor (3) should require to run through the predetermined angle of rotation.

36. Method according to claim 35, in which a difference is formed from the digital set value signal and the digital actual value signal, or vice versa, in order to obtain a digital deviation signal (CNT_R) for the amount of the control deviation and a digital sign signal (VZ_R) for the sign of this control deviation.

37. Method according to claim 36, for an electric motor which has an associated PWM controller for controlling the motor current, the pulse duty cycle of this controller being controllable by the voltage at a capacitor (124), with the following steps:

the capacitor (124) is charged or discharged for a period of time which is essentially proportional to the absolute quantity of the digital deviation signal (CNT_R); the sign signal (VZ_R) is used to control whether the capacitor is charged or discharged during this period of time.

38. Method according to one or more of claims 24 to 37, in which the digital values of the family of characteristics are stored in a non-volatile memory (26).

**39.** Method according to claim 38, in which at least a part of the individual digital values stored in the non-volatile memory (26) can be changed.

**40.** Method according to claim 39, for an electric motor which comprises a connection (30) which can be connected to an input device for inputting a value into the non-volatile memory (26), in which values in the non-volatile memory (26) are changed by means of this connection (30).

**41.** Method according to claim 39 or 40, in which data is transferred into the non-volatile memory (26) over a data bus (fig. 18: 30).

**42.** Method according to claim 40 or 41, in which the data transfer from and/or to the non-volatile memory (26) is controlled by the microprocessor or microcontroller (11) of the electric motor.

**43.** Method according to claim 42, in which for the data connection to an external input device the microcontroller (11) or microprocessor of the motor (9) is operated as a so-called slave of this data connection.

**44.** Method according to one of claims 24 to 43, in which the operating time is counted.

**45.** Method according to claim 44, in which the operating time is checked from the exterior.

**46.** Method according to claim 24 or 25, in which the individual digital values are stored at least in part in the form of a point with an associated gradient.

**47.** Method according to one of claims 24 to 46, in which individual values of characteristic definition points containing at least one value characterising a particular temperature and rotational speed information associated with this temperature are stored in the memory (4; 26).

**48.** Method according to claim 47, in which a current value for the temperature controlling the rotational speed of the motor is detected at intervals of time, and this detected value is compared with the stored values of the characteristic definition points characterising the temperature.

**49.** Method according to claim 48, in which a stored value neighbouring the current value for the temperature is determined, in which further rotational speed information for the detected current value is determined by interpolation based on this neighbouring value, and in which a value (H_L) derived from this interpolated rotational speed information is used to define a set rotational speed for the rotational speed control.

**50.** Method according to claim 49, in which the interpolated rotational speed information is determined by linear interpolation.

**51.** Method according to one of claims 24 to 50, in which a gradient for the linear interpolation is stored for at least one value characterising a characteristic definition point in addition to that for a particular temperature and rotational speed information associated with this value.

**52.** Method according to one or more of claims 38 to 51, in which the detected value characterising the temperature is compared with a value characterising the temperature detected during a preceding detection operation, and the value serving to define the set rotational speed is only changed if either the temperature has increased or if it has decreased by a predetermined minimum value.

**53.** Method according to claim 52, in which the predetermined minimum value is stored as a variable.

**54.** Method according to claim 53, in which the predetermined minimum value is changed in the non-volatile memory by means of a bus.

**55.** Method according to one or more of claims 24 to 54, in which the detected value characterising the temperature is checked for plausibility, and a predetermined rotational speed set value is produced when this detected value corresponds to a temperature which does not occur in practice, in particular a temperature which is too low.

**56.** Method according to claim 55, in which a minimum temperature is assumed for the temperature which does not occur, and predetermined rotational speed information is associated with all temperatures which are less than or equal to this temperature.

57. Method according to claim 56, in which the predetermined minimum temperature and the associated predetermined rotational speed information are stored in a non-volatile memory and can be changed.

58. Method according to claim 57, in which the electric motor is set to its maximum rotational speed when the detected value characterising the temperature corresponds to a temperature which does not occur in practice.

59. Method according to one or more of claims 24 to 58, in which the rotational speed of the motor is regulated using pulse width modulation with a triangular signal applied to one input of a comparator and a voltage which is predetermined by a capacitor at another input of this comparator and can be changed by a microcontroller.

60. Method according to claim 59, in which a change in the charging of the capacitor is interrupted at least once by another process.


**Revendications**

1. Moteur électrique (9) ayant une vitesse de rotation commandée par une grandeur physique variable (2), en particulier une température,
ainsi que comprenant un microcontrôleur (11) ou microprocesseur et une mémoire non volatile associée à celui-ci, **caractérisé en ce qu'**un réseau de courbes caractéristiques est mémorisé dans la mémoire non volatile sous la forme de valeurs individuelles numériques, dans lequel des valeurs de la grandeur physique sont associées à des valeurs de vitesse de rotation correspondantes, le microcontrôleur (11) ou microprocesseur ayant accès aux valeurs individuelles numériques mémorisées et un programme d'interpolation entre des valeurs individuelles mémorisées dans le réseau de courbes caractéristiques lui étant associé pour déterminer par interpolation et commander la vitesse de rotation dans l'intervalle entre des valeurs mémorisées.

2. Moteur électrique (9) selon la revendication 1, dans lequel les valeurs individuelles numériques sont, au moins partiellement, mémorisées sous forme vectorielle.

3. Moteur électrique selon la revendication 1 ou 2, dans lequel la grandeur physique variable est une température saisie par une résistance variable avec la température (18).

4. Moteur électrique (9) selon l'une ou plusieurs des revendications précédentes, avec un convertisseur A/N (10) pour la conversion d'une grandeur physique analogique (2) en une valeur numérique.

5. Moteur électrique (9) selon la revendication 4, avec un dispositif pour contrôler s'il se produit un débordement lors de la conversion A/N.

6. Moteur électrique (9) selon la revendication 5, dans lequel, s'il se produit un débordement, la valeur numérique obtenue lors de la conversion A/N est remplacée par une valeur numérique prédéfinie.

7. Moteur électrique selon l'une ou plusieurs des revendications précédentes, dans lequel le convertisseur A/N est suivi d'une fonction d'hystérésis (S504) qui, en cas de petites variations de la grandeur physique, maintient la valeur numérique déterminée lors d'une conversion A/N précédente pour réduire les variations de vitesse de rotation du moteur.

8. Moteur électrique (9) selon la revendication 7, dans lequel la fonction d'hystérésis est active seulement en cas de variations de la grandeur physique dans un sens et pas en cas de variations dans le sens opposé.

9. Moteur électrique (9) selon l'une ou plusieurs des revendications précédentes, dans lequel le convertisseur A/N (10) est suivi d'une fonction de plausibilité (S506) qui vérifie la plausibilité de la valeur numérique déterminée lors d'une conversion A/N et remplace une valeur numérique non plausible par une valeur numérique prédéfinie.

10. Moteur électrique (9) selon l'une ou plusieurs des revendications 4 à 9, dans lequel un régulateur de vitesse de rotation (6) est associé au moteur électrique et le signal généré lors de la conversion A/N sert à générer un signal de valeur de consigne pour ce régulateur de vitesse de rotation.

**11.** Moteur électrique (9) selon la revendication 10, dans lequel on utilise comme signal de valeur réelle un signal numérique qui est essentiellement proportionnel au temps que met le rotor du moteur électrique pour parcourir un angle de rotation prédéfini.

**12.** Moteur électrique (9) selon les revendications 10 et 11, dans lequel la valeur numérique déterminée lors de la conversion A/N est convertie (S512) en une valeur pour le temps que le rotor (39) doit mettre pour parcourir l'angle de rotation prédéfini.

**13.** Moteur électrique (9) selon la revendication 12, dans lequel on forme une différence du signal de valeur de consigne numérique et du signal de valeur réelle numérique, ou inversement, pour obtenir un signal numérique d'écart (CNT_ R) pour la mesure de l'écart de régulation et un signal numérique de signe (VZ_R) pour le signe de cet écart de régulation.

**14.** Moteur électrique (9) selon la revendication 13, dans lequel il est prévu un organe de commande PWM pour la commande du courant de moteur, dont le rapport cyclique peut être commandé par la tension à un condensateur (124),
et ce condensateur est chargé ou déchargé pendant une durée qui est essentiellement proportionnelle à la valeur absolue du signal numérique d'écart, le signal de signe commandant si le condensateur est chargé ou déchargé.

**15.** Moteur électrique (9) selon l'une ou plusieurs des revendications précédentes, dans lequel il est prévu une mémoire non volatile (26) pour la mémorisation des valeurs numériques du réseau de courbes caractéristiques.

**16.** Moteur électrique (9) selon la revendication 15, dans lequel au moins une partie des valeurs individuelles numériques mémorisées dans la mémoire non volatile (26) est modifiable.

**17.** Moteur électrique (9) selon la revendication 16, dans lequel il est prévu une connexion (30) qui peut être reliée à un appareil d'entrée pour l'entrée d'une valeur dans la mémoire non volatile (26).

**18.** Moteur électrique (9) selon la revendication 16 ou 17, dans lequel il est prévu une liaison avec un bus de données via lequel des données peuvent être transférées dans la mémoire non volatile.

**19.** Moteur électrique (9) selon la revendication 17 ou 18, dans lequel la transmission de données de et/ou vers la mémoire non volatile (26) peut être commandée par le microprocesseur ou microcontrôleur (11) du moteur électrique.

**20.** Moteur électrique (9) selon la revendication 19, dans lequel le microcontrôleur (11) ou microprocesseur du moteur est conçu pour la liaison de données avec un appareil d'entrée externe à la manière d'un « esclave » de cette liaison de données.

**21.** Moteur électrique (9) selon l'une des revendications précédentes, dans lequel le temps de fonctionnement est compté.

**22.** Moteur électrique (9) selon la revendication 21, dans lequel le temps de fonctionnement peut être consulté de l'extérieur.

**23.** Moteur électrique (9) selon la revendication 1 ou 2, dans lequel les valeurs individuelles numériques sont, au moins partiellement, mémorisées sous forme de point avec pente correspondante.

**24.** Procédé pour commander la vitesse de rotation d'un moteur électrique (9) en fonction d'une grandeur physique, auquel moteur sont associés un microcontrôleur (11) ou microprocesseur ainsi qu'une mémoire (26) pour la mémorisation de données auxquelles le microprocesseur ou microcontrôleur (11) a accès, présentant les étapes suivantes :

un réseau de courbes caractéristiques pour l'association de valeurs de la grandeur physique à des valeurs de vitesse de rotation correspondantes du moteur est mémorisé sous la forme de valeurs individuelles numériques dans la mémoire (4 ; 26) ;
une interpolation est effectuée entre les valeurs individuelles mémorisées dans le réseau de courbes caractéristiques pour déterminer par interpolation et commander la vitesse de rotation dans l'intervalle entre des valeurs individuelles mémorisées.

25. Procédé selon la revendication 24, dans lequel les valeurs individuelles numériques sont, au moins partiellement, mémorisées sous forme vectorielle.

26. Procédé selon la revendication 24 ou 25, dans lequel la grandeur physique variable est une température saisie.

27. Procédé selon l'une ou plusieurs des revendications 24 à 26 pour un moteur électrique auquel est associé un convertisseur A/N (10), une grandeur physique analogique (2) étant convertie en une valeur numérique.

28. Procédé selon la revendication 27, dans lequel on contrôle s'il se produit un débordement lors de la conversion A/N.

29. Procédé selon la revendication 28, dans lequel, s'il se produit un débordement, la valeur numérique obtenue lors de la conversion A/N est remplacée par une valeur numérique prédéfinie.

30. Procédé selon l'une ou plusieurs des revendications 27 à 29, dans lequel, en cas de petites variations de la grandeur physique, la valeur numérique déterminée lors d'une conversion A/N précédente est maintenue au moyen d'une fonction d'hystérésis (S504) pour réduire les variations de vitesse de rotation du moteur.

31. Procédé selon la revendication 30, dans lequel la fonction d'hystérésis est active seulement en cas de variations de la grandeur physique dans un sens prédéfini et pas en cas de variations dans le sens opposé.

32. Procédé selon l'une ou plusieurs des revendications 27 à 31, dans lequel les valeurs de sortie du convertisseur A/N (10) sont soumises à un contrôle de plausibilité (S506) qui remplace une valeur numérique non plausible par une valeur numérique prédéfinie.

33. Procédé selon l'une ou plusieurs des revendications 27 à 32 pour un moteur électrique auquel est associé un régulateur de vitesse de rotation (6) dans lequel on génère à partir du signal généré lors de la conversion A/N un signal de valeur de consigne pour le régulateur de vitesse de rotation.

34. Procédé selon la revendication 33, dans lequel on utilise comme signal de valeur réelle un signal numérique qui est essentiellement proportionnel au temps que met le rotor du moteur électrique pour parcourir un angle de rotation prédéfini.

35. Procédé selon les revendications 33 et 34, dans lequel la valeur numérique déterminée lors de la conversion A/N est convertie (S512) en une valeur pour un intervalle de temps que le rotor (39) doit mettre pour parcourir l'angle de rotation prédéfini.

36. Procédé selon la revendication 35, dans lequel on forme une différence du signal de valeur de consigne numérique et du signal de valeur réelle numérique, ou inversement, pour obtenir un signal numérique d'écart (CNT_R) pour la mesure de l'écart de régulation et un signal numérique de signe (VZ_R) pour le signe de cet écart de régulation.

37. Procédé selon la revendication 36 pour un moteur électrique auquel est associé un organe de commande PWM pour la commande du courant de moteur, le rapport cyclique de cet organe de commande pouvant être commandé par la tension à un condensateur (124), présentant les étapes suivantes :

le condensateur (124) est chargé ou déchargé pendant une durée qui est essentiellement proportionnelle à la valeur absolue du signal numérique d'écart (CNT_R) ;
le signal de signe (VZ_R) commande si le condensateur est chargé ou déchargé pendant cette durée.

38. Procédé selon l'une ou plusieurs des revendications 24 à 37, dans lequel les valeurs numériques du réseau de courbes caractéristiques sont mémorisées dans une mémoire non volatile (26).

39. Procédé selon la revendication 38, dans lequel au moins une partie des valeurs individuelles numériques mémorisées dans la mémoire non volatile (26) est modifiable.

40. Procédé selon la revendication 39 pour un moteur électrique qui présente une connexion (30) qui peut être reliée à un appareil d'entrée pour l'entrée d'une valeur dans la mémoire non volatile (26),
et des valeurs contenues dans la mémoire non volatile (26) peuvent être modifiées par l'intermédiaire de cette connexion (30).

41. Procédé selon la revendication 39 ou 40, dans lequel des données peuvent être transférées dans la mémoire non volatile (26) via un bus de données (fig. 18 : 30).

42. Procédé selon la revendication 40 ou 41, dans lequel la transmission de données de et/ou vers la mémoire non volatile (26) est commandée par le microprocesseur ou microcontrôleur (11) du moteur électrique.

43. Procédé selon la revendication 42, dans lequel le microcontrôleur (11) ou microprocesseur du moteur (9) est utilisé pour la liaison de données avec un appareil d'entrée externe à la manière d'un « esclave » de cette liaison de données.

44. Procédé selon l'une des revendications 24 à 43, dans lequel le temps de fonctionnement est compté.

45. Procédé selon la revendication 44, dans lequel le temps de fonctionnement est consulté de l'extérieur.

46. Procédé selon la revendication 24 ou 25, dans lequel les valeurs individuelles numériques sont, au moins partiellement, mémorisées sous la forme d'un point avec pente correspondante.

47. Procédé selon l'une des revendications 24 à 46, dans lequel des valeurs individuelles de points de définition de courbe caractéristique sont mémorisées dans la mémoire (4 ; 26), lesquelles contiennent au moins une valeur caractéristique d'une certaine température et une information de vitesse de rotation associée à cette température.

48. Procédé selon la revendication 47, dans lequel on saisit à intervalles dans le temps une valeur actuelle pour la température, laquelle commande la vitesse de rotation du moteur, et on compare cette valeur saisie avec les valeurs mémorisées, caractéristiques de la température, des points de définition de courbe caractéristique.

49. Procédé selon la revendication 48, dans lequel on détermine une valeur mémorisée voisine de la valeur actuelle pour la température,
dans lequel on détermine en outre par une interpolation à partir de cette valeur voisine une information de vitesse de rotation pour la valeur actuelle saisie,
et dans lequel on utilise une valeur (H_L) déduite de cette information de vitesse de rotation interpolée pour prescrire une vitesse de rotation de consigne pour la régulation de vitesse de rotation.

50. Procédé selon la revendication 49, dans lequel l'information de vitesse de rotation interpolée est déterminée par interpolation linéaire.

51. Procédé selon l'une des revendications 24 à 50, dans lequel, pour au moins un point de définition de courbe caractéristique, on mémorise, en plus de la valeur caractéristique d'une certaine température et d'une information de vitesse de rotation associée à cette valeur, une pente pour l'interpolation linéaire.

52. Procédé selon l'une ou plusieurs des revendications 38 à 51, dans lequel on compare la valeur saisie, caractéristique de la température, avec une valeur caractéristique de la température saisie lors d'une saisie précédente et on n'effectue une modification de la valeur servant à prescrire la vitesse de rotation de consigne que soit si la température a augmenté, soit si elle a diminué d'une valeur minimale prédéfinie.

53. Procédé selon la revendication 52, dans lequel la valeur minimale prédéfinie est mémorisée sous forme de variable.

54. Procédé selon la revendication 53, dans lequel la valeur minimale prédéfinie est modifiée par l'intermédiaire d'un bus dans la mémoire non volatile.

55. Procédé selon l'une ou plusieurs des revendications 24 à 54, dans lequel on contrôle la plausibilité de la valeur saisie, caractéristique de la température,
et on génère une valeur de consigne de vitesse de rotation prédéfinie si cette valeur saisie correspond à une température qui ne se rencontre pas dans la pratique, en particulier à une température trop basse.

56. Procédé selon la revendication 55, dans lequel on admet une température minimale pour la température qui ne se rencontre pas,

et on associe une information de vitesse de rotation prédéfinie à toutes les températures qui sont inférieures ou égales à cette température.

57. Procédé selon la revendication 56, dans lequel la température minimale prédéfinie et l'information de vitesse de rotation prédéfinie associée sont mémorisées dans une mémoire non volatile et modifiables.

58. Procédé selon la revendication 57, dans lequel on règle le moteur électrique à sa vitesse de rotation maximale quand la valeur saisie, caractéristique de la température correspond à une température qui ne se rencontre pas dans la pratique.

59. Procédé selon l'une ou plusieurs des revendications 24 à 58, dans lequel on utilise, pour la régulation de la vitesse de rotation du moteur, une modulation de largeur d'impulsions avec un signal triangulaire appliqué à une entrée d'un comparateur et une tension prescrite par un condensateur, laquelle est modifiable par un microcontrôleur, à une autre entrée de ce comparateur.

60. Procédé selon la revendication 59, dans lequel une modification de la charge du condensateur est interrompue au moins une fois par un autre processus.

7

6

23a

23

Motor

9

Tachogenerator

8a

8

10

A/D

MEM + DATA

4

2

A

Fig. 1

Fig. 2

VCC    ESDA    ESCL    N16

HALL    INT

Res    Res

CS    LO

CP+    CP+

CP-    CP-

VCC    L3    L4    SO

11

COP 842 CJ

ST    SDA

SK    SCL

G1    OUT1

G2    OUT2

G3    AL

L5    Ib

L6    Iref

L7    RGL

GND    CKO    CKI

GND    CKO    CKI

Fig. 3

31

Fig. 4

START

WDCNT := 0xFF
WDREN := 1 ⌐S100

CNT_LB := 0x00
CNT_HB := 0x00 ⌐S102

CP+ := LOW
CP- := TRISTATE ⌐S104

WDCNT := 0xFF
WDREN := 1 ⌐S106

S108
CNT_HB = 0x00? —Y→

NTC_OLD := NTC_VAL
CNT_HB := 0xFC
CP+ := TRISTATE
CMPEN := 1 ⌐S110

N

CMPReadBit = 1? —Y— S112

LSB(CNT_HB) = 1? —Y→ S114

CNT_LB := 0xFF
⌐S116

N

N

NTC_VAL := 255 - CNT_LB
CMPEN := 0
CP+ := LOW ⌐S118

WDCNT > 0xFB? ⌐S120

Y

(CNT_HB, CNT_LB) :=
(CNT_HB, CNT_LB) + 1 ⌐S122

Fig. 5

79 — Watchdog-Timer
e.g. 256 μs

78 — FD: e.g. 4/1
e.g. 1,024 ms

ca. 1000 Hz

80    81    83

| M S B | | | | | | | L S B |
CNT_HB

| M S B | | | | | | | L S B |
CNT_LB

82

CNT80

# Fig. 6

Fig.7

EP 1 105 960 B1

Fig.8

```
                    ┌─────────┐
                    │  START  │
                    └────┬────┘
                         │
                        ╱ ╲   S210
                       ╱   ╲
                      ╱NTC_VAL>╲
              Y ─────╲NTC_OLD?╱
              │       ╲     ╱
              │        ╲ ╱ N
              │         │
              │        ╱ ╲   S212
              │       ╱   ╲
              │      ╱NTC_OLD-╲
              │     ╱ NTC_VAL  ╲── N ──┐
              │     ╲ >HYST?   ╱       │
              │      ╲       ╱      ┌──┴──────┐
              │       ╲  ╱ Y        │NTC_VAL:=│ S214
              │        │            │NTC_OLD  │
              └────────┼────────────└──┬──────┘
                       │               │
                       └───────┬───────┘
                          ┌────┴────┐
                          │   END   │
                          └─────────┘
```

Fig. 9

START

S200

NTC_VAL >
T_SA

N

Y

S202

n_s := f(NTC_VAL)

S204

n_s := n_SA

END

# Fig. 10

Fig. 11

| P | T | | n | | S |
|---|---|---|---|---|---|
| | °C | hex | min$^{-1}$ | hex | hex |
| 1 | 0 | 0x39 | 2000 | 0x07D0 | 0x0000 |
| 2 | 30 | 0x8D | 2000 | 0x07D0 | 0x001E |
| 3 | 60 | 0xCF | 4000 | 0x0FA0 | 0x0000 |
| 4 | 100 | 0xF1 | 4000 | 0x0FA0 | 0x0000 |

Fig. 12

START

S300
N := 1

S301
N := N + 1

S302
T(N) < NTC_VAL ? — Y

N

S304
T(N) = NTC_VAL ? — Y — S305
n_s := n(N)

N

S306
A := N - 1

S307
X := NTC_VAL - T(A)
n_s := n(A) + X * S(N)

S308
END

Fig. 13

41

Fig. 14

S304

S306'

$$A := N - 1$$
$$B := N$$

S307'

$$D\_T := T(B) - T(A)$$
$$D\_n := n(B) - n(A)$$
$$S := D\_n / D\_T$$
$$X := NTC\_VAL - T(A)$$
$$n\_s := n(A) + X * S$$

S308

# Fig. 15

Fig. 16

START

t_A := TIMER
HL_i := t_A - t_O
t_O := t_A          ⌐S320

S322

HALL = 1?

Y                              N

OUT2 := LOW    ⌐S324          OUT1 := LOW    ⌐S330

e.g. 50 μs    ⌐S326          e.g. 50 μs    ⌐S332

OUT1 := HIGH  ⌐S328          OUT2 := HIGH  ⌐S334

HALL_INT :=   ⌐S329          HALL_INT :=   ⌐S335
(HIGH -> LOW)                (LOW -> HIGH)

END

Fig. 17

Fig. 18

Fig. 19

EP 1 105 960 B1

Fig. 20

```
                          ┌─────────┐
                          │  START  │
                          └────┬────┘
                               │
                               ▼
     ┌──────────────────────────────────────────┐
     │  D_HL = HL_s - HL_i                        │──── S440
     │       = 0x3A98 - 0x3544                    │
     │       = 0x0554                             │
     │     = 00000101 01010100 bin               │
     └──────────────────────────────────────────┘
                               │
                               ▼        ─S442
  S444                    ╱─────────────╲                      S446
┌──────────┐          Y ╱               ╲  N          ┌──────────────────────┐
│ VZ_R := 0│◄─────────  │   D_HL > 0?   │───────────► │ D_HL = HL_i - HL_s   │
└────┬─────┘            ╲               ╱             │      VZ_R := 1       │
     │                    ╲─────────────╱             └───────────┬──────────┘
     │                                                            │
     └────────────────────────┐  ┌───────────────────────────────┘
                               ▼  ▼
     ┌──────────────────────────────────────────┐
     │  3 * >>                                    │──── S448
     │           HB          LB                   │
     │  1. 00000010  10101010 bin                 │
     │  2. 00000001  01010101 bin                 │
     │  3. 00000000  10101010 bin                 │
     └──────────────────────────────────────────┘
                               │
        S452                   ▼      ─S450
     ╱─────────╲          ╱─────────╲
  Y ╱           ╲  ◄──Y  ╱           ╲  N
  ┌ │  LB = 0? │◄──────  │  HB = 0?  │────────────────┐
  │ ╲           ╱        ╲           ╱                 │
  │  ╲─────────╱          ╲─────────╱                 │
  │       │N                                          │
  │Y      │                                           │
  ▼       ▼                                           ▼
┌───────────────┐  ┌──────────────────────┐    ┌───────────────┐
│CNT_R := 0x01  │  │ CNT_R := LB          │    │CNT_R := 0xFF  │
└───────┬───────┘  │  = 10101010 bin      │    └───────┬───────┘
S454    │          │  = 0xAA = 170        │  S458       │
        │          └──────────┬───────────┘             │
        │            S456      │                        │
        └──────────────┐  ┌────┴──┐  ┌──────────────────┘
                       ▼  ▼       ▼
                      ┌─────────┐
                      │   END   │
                      └─────────┘
```

Fig. 21

Fig.22A

Fig. 22B

Fig.22C

Fig.22D

Fig.22

RGL = TRISTATE

50

*Fig.23A*

RGL = HIGH

*Fig.23E*

*Fig. 23B*

*Fig.23C*

*Fig. 23D*

*Fig. 23*

Fig. 24E

Fig. 24A

RGL = LOW

Fig. 24B

Fig. 24C

Fig. 24D

Fig. 24

```
        ┌──────────────┐
        │     NTC      │ ──S500
        │   [ U_NTC]   │
        └──────┬───────┘
               ▼
        ┌──────────────┐
        │     A/D      │ ──S502
        │  [ NTC_VAL]  │
        └──────┬───────┘
               ▼
        ┌──────────────┐
        │     HYST     │ ──S504
        │  [ NTC_VAL]  │
        └──────┬───────┘
               ▼
         ◇──────────◇                    ──S506
        ◇    SA      ◇──Y─┐
         ◇[ NTC_VAL]◇      │       ┌────────────────┐
          ◇──┬───◇         └──────▶│ [ n_s := n_SA] │ ──S508
             │N                    └───────┬────────┘
             ▼                             │
   ┌──────────────┐ ──S510                 │      ┌───────────────┐
   │  f(NTC_VAL)  │                        │      │  Hall-Sensor  │ ──S514
   │    [ n_s]    │                        │      │   [ HALL]     │
   └──────┬───────┘                        │      └───────┬───────┘
          │           ┌───────────────────┘              ▼
          ▼           ▼                          ┌────────────────┐
   ┌──────────────────┐              ┌──────────▶│   MEAS HL_i    │ ──S516
   │    CALC HL_s     │              │           │    [ HL_i]     │
   │    [ HL_s]       │              │           └───────┬────────┘
   └────────┬─────────┘              │                   │
    ──S512  └──────────┐             │  ┌────────────────┘
                       ▼             ▼  ▼
              ┌────────────────────────────┐
              │           CALC             │ ──S518
              │      [ CNT_R, VZ_R]        │
              └─────────────┬──────────────┘
                            ▼
              ┌────────────────────────────┐
              │           OUT              │ ──S520
              │         [ U_C]             │
              └─────────────┬──────────────┘
                            ▼
              ┌────────────────────────────┐
              │           PWM              │ ──S522
              │      [ PWM-Signal]         │
              └─────────────┬──────────────┘
                            ▼
              ┌────────────────────────────┐
              │           Motor            │ ──S524
              └────────────────────────────┘
```

## Fig. 25

Fig. 26

| 8 | 7 | 6 | 5 | 4 | 3 | 2 | 1 |
|---|---|---|---|---|---|---|---|
| X | X | X | X | FCT_HL | FCT_IPOL | FCT_PT | FCT_FILT |

MSB

LSB

Fig. 27

197

START

S100

WDCNT := 0xFF
WDREN := 1

INIT

S102

CNT_LB := 0x00
CNT_HB := 0x00

S104

CP+ := LOW
CP- := TRISTATE

S106

WDCNT := 0xFF
WDREN := 1

Ⓐ

S108

CNT_HB = 0x00? —Y→

S110

NTC_OLD := NTC_VAL
CNT_HB := 0xFC
CP+ := TRISTATE
CMPEN := 1

N

S112

CMPReadBit = 1? —Y→

S114

LSB(CNT_HB) = 1? —Y⌐

N

CNT_LB := 0xFF

S116

N

Ⓑ

S118

NTC_VAL := 255 - CNT_LB
CMPEN := 0
CP+ := LOW
FCT_FILT := 1

S120

WDCNT > 0xFB? ◀

Y

S122

(CNT_HB, CNT_LB) :=
(CNT_HB, CNT_LB) + 1

Fig. 28

START

S400

FLAG_R = 1?

N ──────────────

FLAG_R := 1 ── S402

(HL_s - HL_i)
=> CNT_R, VZ_R ── S404

Y

TMP_R := CNT_R - 8 ── S410

S412

TMP_R > 0?

N ──── S414          Y ──── S416

N := CNT_R
FLAG_R := 0

N := 8
CNT_R := TMP_R

S418

VZ_R = 1?

N ──── S420          J ──── S422

RGL := 0          RGL := 1

N := N - 1
e.g. 10 µs ── S424'

J

N > 0? ── S426'

N

RGL := TRISTATE ── S428

END

Fig. 29